(19) Europäisches Patentamt / European Patent Office / Office européen des brevets

(11) **EP 4 759 879 A1**

(12) **EUROPEAN PATENT APPLICATION**
published in accordance with Art. 153(4) EPC

(43) Date of publication:
**17.06.2026 Bulletin 2026/25**

(21) Application number: **24851943.1**

(22) Date of filing: **09.08.2024**

(51) International Patent Classification (IPC):
*C08L 77/06* (2006.01)   *C08J 5/04* (2006.01)
*C08J 5/18* (2006.01)   *C08K 3/013* (2018.01)
*C08K 3/04* (2006.01)   *C08K 3/22* (2006.01)
*C08K 3/30* (2006.01)   *C08K 5/08* (2006.01)
*C08K 5/3415* (2006.01)   *C08L 25/08* (2006.01)
*C08L 25/18* (2006.01)

(52) Cooperative Patent Classification (CPC):
**C08J 5/04; C08J 5/18; C08K 3/013; C08K 3/04;
C08K 3/22; C08K 3/30; C08K 5/08; C08K 5/3415;
C08L 25/08; C08L 25/18; C08L 77/06**

(86) International application number:
**PCT/JP2024/028614**

(87) International publication number:
**WO 2025/033526 (13.02.2025 Gazette 2025/07)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **10.08.2023 JP 2023131625
10.08.2023 JP 2023131630**

(71) Applicant: **Kuraray Co., Ltd.
Kurashiki-shi, Okayama 710-0801 (JP)**

(72) Inventors:
• **SUGAI, Naoto
Tokyo 100-0004 (JP)**
• **OSAWA, Yuki
Tokyo 100-0004 (JP)**
• **YASHIMA, Akira
Tsukuba-shi, Ibaraki 305-0841 (JP)**

(74) Representative: **Müller-Boré & Partner
Patentanwälte PartG mbB
Friedenheimer Brücke 21
80639 München (DE)**

(54) **POLYAMIDE RESIN COMPOSITION**

(57) Specifically disclosed is a polyamide resin composition containing a polyamide (A) having a melting point of 280°C or higher, a bromine-based flame retardant (B), an inorganic filler (C), an aromatic vinyl-based copolymer (D), and a colorant (E), in which the polyamide (A) contains a diamine unit, 50 to 100 mol% of the diamine unit is an aliphatic diamine unit having 4 to 18 carbon atoms, and when particles of the bromine-based flame retardant (B) are observed in a specific region in a cross section in the thickness direction of a test piece made of the polyamide resin composition, Rs1 represented by a formula: (bs/as) × As is smaller than 0.2 $\mu m^2$, in the formula, bs/as is the number-average value of the ratio of the Feret's diameter perpendicular to the minimum Feret's diameter among the Feret's diameters of the particles of the bromine-based flame retardant (B) observed in the region, and As is the number-average value ($\mu m^2$) of the cross-sectional area of the particles of the bromine-based flame retardant (B) observed in the region.

[Fig. 3]

## Description

Technical Field

The present invention relates to a polyamide resin composition. More specifically, the present invention relates to a polyamide resin composition, a method for producing the polyamide resin composition, and a molded article of the polyamide resin composition.

Background Art

Polyamide resins are used in various applications such as automobile parts and electric/electronic parts because of their excellent mechanical properties, heat resistance, and the like. In some cases, a halogen-based flame retardant, for example, a bromine-based flame retardant is added to the polyamide resin composition as a flame retardant (see PTLs 1 to 4). A polyamide resin composition having such enhanced flame retardancy is also referred to as a flame-retardant polyamide resin composition.

Citation List

Patent Literature

PTL 1: WO 2020/040191 A1
PTL 2: JP 2002-138197 A
PTL 3: JP 2000-186206 A
PTL 4: JP 2007-291250 A

Summary of Invention

Technical Problem

When a molded article of a flame-retardant polyamide resin composition (hereinafter, also referred to as "flame-retardant polyamide resin molded article", and sometimes simply referred to as "molded article") is exposed to a high temperature during a reflow process, the inside or surface of the molded article may swell, that is, blisters may occur. However, in PTLs 1 to 4, the blisters are not sufficiently studied.
In addition, the flame-retardant polyamide resin composition may be colored and used for applications for the above-described automobile parts or applications for electric/electronic parts. As a result of studies by the present inventors, it has been found that when a molded article of a flame-retardant polyamide resin composition containing a colorant is exposed to a high temperature during a reflow process, the occurrence rate of blisters tends to increase.
Therefore, there is a demand for a flame-retardant polyamide resin composition that can provide a flame-retardant polyamide resin molded article having a low occurrence rate of blisters even when exposed to a high temperature during a reflow process, that is, having excellent blister resistance.
Therefore, an object of the present invention is to provide a polyamide resin composition capable of obtaining a flame-retardant polyamide resin molded article having excellent blister resistance even when exposed to a high temperature during a reflow process, a method for producing the polyamide resin composition, and a molded article of the polyamide resin composition.

Solution to Problem

As a result of intensive studies to solve the above problems, the present inventors have conceived of the present invention described below and found that the problems can be solved.
In other words, the present invention is as follows.

[1] A polyamide resin composition containing a polyamide (A) having a melting point of 280°C or higher, a bromine-based flame retardant (B), an inorganic filler (C), an aromatic vinyl-based copolymer (D), and a colorant (E),

in which the polyamide (A) contains a diamine unit, 50 to 100 mol% of the diamine unit being an aliphatic diamine unit having 4 to 18 carbon atoms,

the colorant (E) is at least one of an organic colorant and an inorganic colorant, and

when particles of the bromine-based flame retardant (B) are observed in a region having a depth of 250 $\mu$m $\pm$ 8.8 $\mu$m from a main surface of a test piece having a length of 30 mm, a width of 10 mm, and a thickness of 1.0 mm made of the polyamide resin composition and having a width orthogonal to a thickness direction of the test piece of 25 $\mu$m in a cross section in the thickness direction of the test piece, a number-average value As ($\mu$m$^2$) of the cross-sectional area of the particles of the bromine-based flame retardant (B) is smaller than 0.1 $\mu$m$^2$.

[2] The polyamide resin composition according to claim 1, in which when the particles of the bromine-based flame retardant (B) in the region are observed, EqD $\times$ $\pi$ ($\mu$m), which is a product of a number-average value EqD of diameters of perfect circles having the same area as a cross-sectional area of the particles of the bromine-based flame retardant (B) and a circular constant $\pi$, is smaller than 1.0 $\mu$m.

[3] A polyamide resin composition containing a polyamide (A) having a melting point of 280°C or higher, a bromine-based flame retardant (B), an inorganic filler (C), an aromatic vinyl-based copolymer (D), and a colorant (E),

in which the polyamide (A) contains a diamine unit, 50 to 100 mol% of the diamine unit being an aliphatic diamine unit having 4 to 18 carbon atoms,

the colorant (E) is at least one of an organic colorant and an inorganic colorant, and

when particles of the bromine-based flame retardant (B) are observed in a region having a depth of 250 $\mu$m $\pm$ 8.8 $\mu$m from a main surface of a test piece having a length of 30 mm, a width of 10 mm, and a thickness of 1.0 mm made of the polyamide resin composition and having a width orthogonal to a thickness direction of the test piece of 25 $\mu$m in a cross section in the thickness direction of the test piece, Rs1 ($\mu$m$^2$) represented by the following formula (1) is smaller than 0.2 $\mu$m$^2$:

$$Rs1 = (bs/as) \times As \quad (1)$$

in which,

bs/as is a number-average value of the ratio of the Feret's diameter perpendicular to the minimum Feret's diameter among the Feret's diameters of the particles of the bromine-based flame retardant (B) observed in the region, and

As is a number-average value ($\mu$m$^2$) of the cross-sectional area of the particles of the bromine-based flame retardant (B) observed in the region.

[4] The polyamide resin composition according to [3], in which when particles of the bromine-based flame retardant (B) in the region are observed, Rs2 ($\mu$m) represented by the following formula (2) is smaller than 1.7 $\mu$m:

$$Rs2 = (bs/as) \times EqD \times \pi \quad (2)$$

in which,

bs/as is the number-average value of the ratio of the Feret's diameter perpendicular to the minimum Feret's diameter among the Feret's diameters of the particles of the bromine-based flame retardant (B) observed in the region, and

EqD is a number-average value ($\mu$m) of the diameters of the perfect circles having the same area as the cross-sectional area of the particles of the bromine-based flame retardant (B) observed in the region.

[5] The polyamide resin composition according to any one of [1] to [4], in which $\Delta$E represented by the following formula (X) is greater than 1:

[Math. 1]

$$\Delta E = [(L^*_{col} - L^*_{nat})^2 + (a^*_{col} - a^*_{nat})^2 + (b^*_{col} - b^*_{nat})^2]^{1/2}$$
$$(X)$$

in which, $\Delta$E is a color difference defined by the CIE1976 (L*a*b*) color system, $L^*_{col}$, $a^*_{col}$, and $b^*_{col}$ are L*, a*, and b* defined by the CIE1976 (L*a*b*) color system of the polyamide resin composition, and $L^*_{nat}$, $a^*_{nat}$, and $b^*_{nat}$ are L*, a*, and b* defined by the CIE1976 (L*a*b*) color system of a colorant-free polyamide resin composition having the same composition as the polyamide resin composition except that the colorant (E) is not contained.

[6] The polyamide resin composition according to any one of [1] to [5], in which the organic colorant is at least one selected from the group consisting of an anthraquinone-based dye, a perinone-based dye, an anthrapyridone-based dye, and a phthalocyanine-based dye.

[7] The polyamide resin composition according to any one of [1] to [6], in which the inorganic colorant is at least one selected from the group consisting of carbon black, a metal oxide, a metal sulfide, and a complex metal oxide.

[8] The polyamide resin composition according to any one of [1] to [7], in which the inorganic colorant is at least one selected from the group consisting of a metal oxide, a metal sulfide, and a complex metal oxide.

[9] The polyamide resin composition according to any one of [1] to [8], in which the colorant (E) contains the organic colorant, and a content of the organic colorant is 0.0001 to 0.5% by mass with respect to 100% by mass of the polyamide resin composition.

[10] The polyamide resin composition according to any one of [1] to [9], in which the colorant (E) contains the inorganic colorant, and a content of the inorganic colorant is 0.001 to 5.0% by mass with respect to 100% by mass of the polyamide resin composition.

[11] The polyamide resin composition according to any one of [1] to [10], in which the bromine-based flame retardant (B) is at least one selected from the group consisting of brominated polystyrene and polybrominated styrene.

[12] The polyamide resin composition according to any one of [1] to [11], in which the polyamide (A) contains a dicarboxylic acid unit, in the polyamide (A), 50 mol% or more of the dicarboxylic acid unit is a terephthalic acid unit, and the aliphatic diamine having 4 to 18 carbon atoms constituting the aliphatic diamine unit having 4 to 18 carbon atoms is at least one selected from the group consisting of 1,4-butanediamine, 1,6-hexanediamine, 1,9-nonanediamine, 2-methyl-1,8-octanediamine, and 1,10-decanediamine.

[13] The polyamide resin composition according to [12], in which the aliphatic diamine having 4 to 18 carbon atoms is at least one selected from the group consisting of 1,9-nonanediamine and 2-methyl-1,8-octanediamine.

[14] The polyamide resin composition according to any one of [1] to [13], in which the aromatic vinyl-based copolymer (D) contains a constitutional unit derived from at least one selected from the group consisting of styrene and $\alpha$-methylstyrene, and a constitutional unit derived from at least one selected from the group consisting of maleic anhydride and monoalkylmaleic anhydride having an alkyl group having 1 or more and 3 or less carbon atoms, and a glass transition temperature of the aromatic vinyl-based copolymer (D) is 120°C or higher.

[15] The polyamide resin composition according to [14], in which a content of the constitutional unit derived from at least one selected from the group consisting of maleic anhydride and monoalkylmaleic anhydride having an alkyl group having 1 or more and 3 or less carbon atoms in the aromatic vinyl-based copolymer (D) is 18 to 50% by mass.

[16] The polyamide resin composition according to any one of [1] to [15], in which the aromatic vinyl-based copolymer (D) has a weight-average molecular weight (Mw) of 10,000 to 500,000.

[17] The polyamide resin composition according to any one of [1] to [16], further containing a flame retardant aid (F).

[18] The polyamide resin composition according to any one of [1] to [17], in which the polyamide resin composition contains

> 25 to 70 parts by mass of the bromine-based flame retardant (B),
> 30 to 250 parts by mass of the inorganic filler (C),
> 0.1 to 10 parts by mass of the aromatic vinyl-based copolymer (D), and
> 0.0005 to 20 parts by mass of the colorant (E),
> with respect to 100 parts by mass of the polyamide (A).

[19] A method for producing the polyamide resin composition according to any one of [1] to [18], including melt-kneading the polyamide (A), the bromine-based flame retardant (B), the inorganic filler (C), the aromatic vinyl-based copolymer (D), and the colorant (E), and optionally a flame retardant aid (F).

[20] A molded article of the polyamide resin composition according to any one of [1] to [18].

[21] The molded article according to [20], which is a connector.

[22] The molded article according to [20] or [21], which is an in-vehicle connector.

Advantageous Effects of Invention

According to the present invention, it is possible to provide a polyamide resin composition capable of obtaining a flame-retardant polyamide resin molded article having excellent blister resistance even when exposed to a high temperature during a reflow process, a method for producing the polyamide resin composition, and a molded article of the polyamide resin composition.

Brief Description of Drawings

[Fig. 1] Fig. 1 is a partially enlarged view showing a cross section in the thickness direction of a test piece C.
[Fig. 2] Fig. 2 is a perspective view of a test piece C.
[Fig. 3] Fig. 3 is a photograph showing an SEM image of an analysis region of a test piece of Example 3.

Description of Embodiments

Hereinafter, the present invention will be described on the basis of an example of an embodiment (hereinafter, sometimes referred to as "the present embodiment") thereof. However, embodiments described below are examples for embodying the technical idea of the present invention, and the present invention is not limited to the following description.
In addition, in the description herein, preferred modes of the embodiments are shown, but a combination of two or more of individual preferred modes is also a preferred mode. Regarding the matters indicated by numerical ranges, in a case where there are several numerical ranges, it is possible to selectively combine a lower limit value and an upper limit value thereof to obtain a preferred mode.
In the description herein, when there is a description pertaining to a numerical range of "XX to YY", the description means "XX or more and YY or less".
In addition, in the description herein, "ZZ unit" (here, "ZZ" indicates a monomer) means "constitutional unit derived from ZZ", for example, "dicarboxylic acid unit" means "constitutional unit derived from dicarboxylic acid", and "diamine unit" means "constitutional unit derived from diamine".

<Polyamide Resin Composition>

The polyamide resin composition according to one embodiment of the present invention is a polyamide resin composition containing a polyamide (A) having a melting point of 280°C or higher, a bromine-based flame retardant (B), an inorganic filler (C), an aromatic vinyl-based copolymer (D), and a colorant (E),

in which the polyamide (A) contains a diamine unit, 50 to 100 mol% of the diamine unit is an aliphatic diamine unit having 4 to 18 carbon atoms,
the colorant (E) is at least one of an organic colorant and an inorganic colorant, and
when particles of the bromine-based flame retardant (B) are observed in a region at a specific depth from a main surface of a test piece made of the polyamide resin composition in a cross-section in the thickness direction of the test piece, Rs1 ($\mu m^2$) represented by the above formula (1) is smaller than 0.2 $\mu m^2$.

The polyamide resin composition according to one embodiment of the present invention is a polyamide resin composition containing a polyamide (A) having a melting point of 280°C or higher, a bromine-based flame retardant (B), an inorganic filler (C), an aromatic vinyl-based copolymer (D), and a colorant (E),

in which the polyamide (A) contains a diamine unit, 50 to 100 mol% of the diamine unit is an aliphatic diamine unit having 4 to 18 carbon atoms,
the colorant (E) is at least one of an organic colorant and an inorganic colorant, and
when particles of the bromine-based flame retardant (B) are observed in a region at a specific depth from a main surface of a test piece made of the polyamide resin composition in a cross-section in the thickness direction of the test piece, Rs2 ($\mu m$) represented by the above formula (2) is smaller than 1.7 $\mu m$.

The polyamide resin composition according to one embodiment of the present invention is a polyamide resin composition containing a polyamide (A) having a melting point of 280°C or higher, a bromine-based flame retardant (B), an inorganic filler (C), an aromatic vinyl-based copolymer (D), and a colorant (E),

in which the polyamide (A) contains a diamine unit, 50 to 100 mol% of the diamine unit is an aliphatic diamine unit having 4 to 18 carbon atoms,
the colorant (E) is at least one of an organic colorant and an inorganic colorant, and
a number-average value As ($\mu m^2$) of the cross-sectional area of the particles of the bromine-based flame retardant (B) observed in a region at a specific depth from a main surface of a test piece made of the polyamide resin composition in a cross-section in the thickness direction of the test piece is smaller than 0.1 $\mu m^2$.

The polyamide resin composition according to one embodiment of the present invention is a polyamide resin composition containing a polyamide (A) having a melting point of 280°C or higher, a bromine-based flame retardant (B), an inorganic filler (C), an aromatic vinyl-based copolymer (D), and a colorant (E),

in which the polyamide (A) contains a diamine unit, 50 to 100 mol% of the diamine unit is an aliphatic diamine unit having 4 to 18 carbon atoms,
the colorant (E) is at least one of an organic colorant and an inorganic colorant, and
EqD × π (μm), which is a product of a number-average value EqD of diameters of perfect circles having the same area as a cross-sectional area of the particles of the bromine-based flame retardant (B) observed in a region at a specific depth from a main surface of a test piece made of the polyamide resin composition in a cross-section in the thickness direction of the test piece and a circular constant π, is smaller than 1.0 μm.

The present inventors have found that the tendency of occurrence of blisters when a flame-retardant polyamide resin molded article is exposed to a high temperature during a reflow process is affected by the presence form of particles of the bromine-based flame retardant (B) in the flame-retardant polyamide resin molded article. Based on these findings, the present invention provides a polyamide resin composition from which a flame-retardant polyamide resin molded article having excellent blister resistance can be obtained.

Specifically, in one embodiment of the present invention, when Rs1 in the test piece made of the polyamide resin composition is smaller than a specific value, a flame-retardant polyamide resin molded article having excellent blister resistance even when exposed to a high temperature during a reflow process can be obtained. In addition, in one embodiment of the present invention, when Rs2 in the test piece made of the polyamide resin composition is smaller than a specific value, a flame-retardant polyamide resin molded article having excellent blister resistance even when exposed to a high temperature during a reflow process can be obtained. In one embodiment of the present invention, when the Rs1 is smaller than the above specific value and the Rs2 is smaller than the above specific value in a test piece made of a polyamide resin composition, a flame-retardant polyamide resin molded article having excellent blister resistance even when exposed to a high temperature during a reflow process can be more reliably obtained.

In one embodiment of the present invention, when the As in the test piece made of the polyamide resin composition is smaller than a specific value, a flame-retardant polyamide resin molded article having excellent blister resistance even when exposed to a high temperature during the reflow process can be obtained. In addition, in one embodiment of the present invention, when EqD × π in the test piece made of the polyamide resin composition is smaller than a specific value, a flame-retardant polyamide resin molded article having excellent blister resistance even when exposed to a high temperature during a reflow process can be obtained. In one embodiment of the present invention, when the As is smaller than the above specific value and the EqD × π is smaller than the above specific value in a test piece made of a polyamide resin composition, a flame-retardant polyamide resin molded article having excellent blister resistance even when exposed to a high temperature during a reflow process can be more reliably obtained.

In the present invention, the reason why it is considered that the occurrence of blisters can be suppressed from the viewpoint of the presence form of the bromine-based flame retardant (B) in the molded article will be described. However, the present invention is not limited to this description.

First, it is considered that the blister is caused by an internal pressure generated by vaporization and expansion of moisture or gas contained in the molded article due to exposure to a high temperature. It is said that water vapor hardly permeates through the bromine-based flame retardant (B). Therefore, in the present invention, it was considered that when the moisture contained in the molded article becomes water vapor inside, if the particle size of the bromine-based flame retardant (B) in the molded article is small, a path for releasing water vapor to the outside is easily secured, and the occurrence of blisters can be suppressed. In addition, as another cause of the blister, it is considered that since the boundary between the polyamide (A) and the bromine-based flame retardant (B) has a weak adhesive force, the bromine-based flame retardant (B) becomes coarse due to, for example, stretching or aggregation at the time of producing a molded article, and thus the bromine-based flame retardant (B) becomes a starting point of a minute interfacial fracture at the time of generating an internal pressure. Also in this case, it was considered that by making the particle size of the bromine-based flame retardant (B) in the molded article sufficiently small, the aggregation of the bromine-based flame retardant (B) can be suppressed, thereby suppressing the occurrence of blisters.

The parameters Rs1 and Rs2 will be described.

Rs1 is represented by the following formula (1).

$$Rs1 = (bs/as) \times As \quad (1)$$

in which,

bs/as is the number-average value of the ratio of the Feret's diameter perpendicular to the minimum Feret's diameter among the Feret's diameters of the particles of the bromine-based flame retardant (B) observed in the region, and As is the number-average value ($\mu$m$^2$) of the cross-sectional area of the particles of the bromine-based flame retardant (B) observed in the region.

The term "Feret's diameter perpendicular to the minimum Feret's diameter" means a Feret's diameter obtained by measuring 10 Feret's diameters of 18° each in the Feret's diameters at 0° to 162°, and the minimum Feret's diameter and the Feret's diameter perpendicular to the minimum Feret's diameter.

Rs1 is a parameter that includes information about the cross-sectional area of the particles of the bromine-based flame retardant (B) observed in the region, as represented by the above formula. As the value of Rs1 is smaller, there is a tendency that a molded article having more excellent blister resistance can be obtained. Rs1 is preferably 0.15 $\mu$m$^2$ or less, and more preferably 0.1 $\mu$m$^2$ or less. The lower limit of Rs1 is more than 0 $\mu$m$^2$. The lower limit of Rs1 is preferably 0.01 $\mu$m$^2$ or more, more preferably 0.03 $\mu$m$^2$ or more, and still more preferably 0.05 $\mu$m$^2$ or more. Rs1 can be acquired by performing image analysis on the SEM image by the method described in Examples which will be described later.

Rs2 is represented by the following formula (2).

$$Rs2 = (bs/as) \times EqD \times \pi \quad (2)$$

In the formula (2),

bs/as is the number-average value ($\mu$m) of the ratio of the Feret's diameter perpendicular to the minimum Feret's diameter among the Feret's diameters of the particles of the bromine-based flame retardant (B) observed in the region, and
EqD is the number-average value ($\mu$m) of the diameters of the perfect circles having the same area as the cross-sectional area of the particles of the bromine-based flame retardant (B) observed in the region.

Rs2 is a parameter including EqD which is the number-average value of the diameters of the perfect circles having the same area as the bromine-based flame retardant (B) observed in the region, as represented by the above formula. As the value of Rs2 is smaller, there is a tendency that a molded article having more excellent blister resistance can be obtained. In one embodiment of the present invention, Rs2 is preferably 1.6 $\mu$m or less, more preferably 1.5 $\mu$m or less, still more preferably 1.4 $\mu$m or less, yet still more preferably 1.2 $\mu$m or less, and even yet still more preferably 1.1 $\mu$m or less. The lower limit of Rs2 is more than 0 $\mu$m. The lower limit of Rs2 is not particularly limited, but is, for example, preferably 0.1 $\mu$m or more, more preferably 0.3 $\mu$m or more, still more preferably 0.5 $\mu$m or more, and yet still more preferably 0.7 $\mu$m or more. Rs2 can be calculated from a numerical value acquired by performing image analysis on the SEM image by the method described in Examples which will be described later.

In one embodiment of the present invention, preferably, Rs1 is less than 0.2 $\mu$m$^2$ and Rs2 is less than 1.7 $\mu$m. More preferably, Rs1 is 0.15 $\mu$m$^2$ or less and Rs2 is 1.6 $\mu$m or less. Still more preferably, Rs1 is 0.1 $\mu$m$^2$ or less and Rs2 is 1.5 $\mu$m or less.

The parameters As and EqD $\times$ $\pi$ will be described.

As includes information about the cross-sectional area of the particles of the bromine-based flame retardant (B), and is the number-average value ($\mu$m$^2$) of the cross-sectional area of the particles of the bromine-based flame retardant (B) observed in the region. As can be acquired by performing image analysis on the SEM image by the method described in Examples which will be described later.

As the value of As is smaller, there is a tendency that a molded article having more excellent blister resistance can be obtained. In one embodiment of the present invention, As is preferably 0.075 $\mu$m$^2$ or less, more preferably 0.06 $\mu$m$^2$ or less, and still more preferably 0.05 $\mu$m$^2$ or less. The lower limit of As is more than 0 $\mu$m$^2$, preferably 0.005 $\mu$m$^2$ or more, more preferably 0.01 $\mu$m$^2$ or more, and still more preferably 0.03 $\mu$m$^2$ or more.

EqD in EqD $\times$ $\pi$ is the number-average value of the diameters of the perfect circles having the same area as the cross-sectional area of the particles of the bromine-based flame retardant (B) observed in the region. EqD $\times$ $\pi$ is a parameter including information on the circumference of a perfect circle having the same area as the cross-sectional area of the particles of the bromine-based flame retardant (B) observed in the region. EqD can be acquired by performing image analysis on the SEM image by the method described in Examples which will be described later.

As the value of EqD $\times$ $\pi$ is smaller, there is a tendency that a molded article having more excellent blister resistance can be obtained. In one embodiment of the present invention, EqD $\times$ $\pi$ is preferably 0.9 $\mu$m or less, more preferably 0.8 $\mu$m or less, and still more preferably 0.7 $\mu$m or less. The lower limit of EqD $\times$ $\pi$ is more than 0 $\mu$m. The lower limit of EqD $\times$ $\pi$ is not particularly limited, but is, for example, preferably 0.1 $\mu$m or more, more preferably 0.2 $\mu$m or more, still more preferably 0.3 $\mu$m or more, and yet still more preferably 0.5 $\mu$m or more.

In one embodiment of the present invention, preferably, As is less than 0.1 $\mu m^2$ and $EqD \times \pi$ is less than 1.0 $\mu m$. More preferably, As is 0.075 $\mu m^2$ or less, and $EqD \times \pi$ is less than 1.0 $\mu m$. Still more preferably, As is 0.075 $\mu m^2$ or less, and $EqD \times \pi$ is 0.8 $\mu m$ or less.

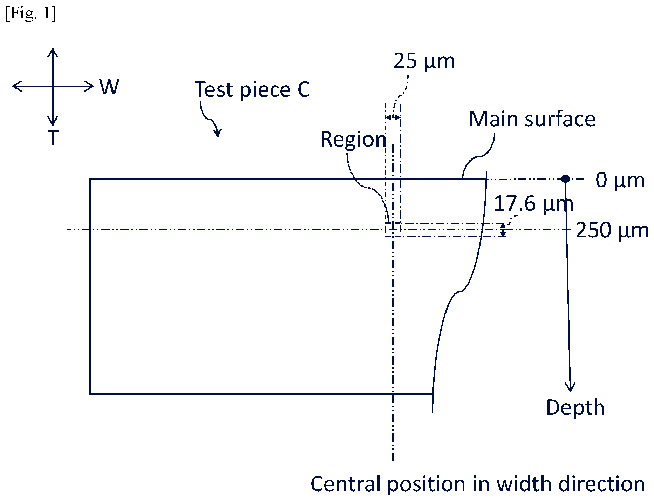

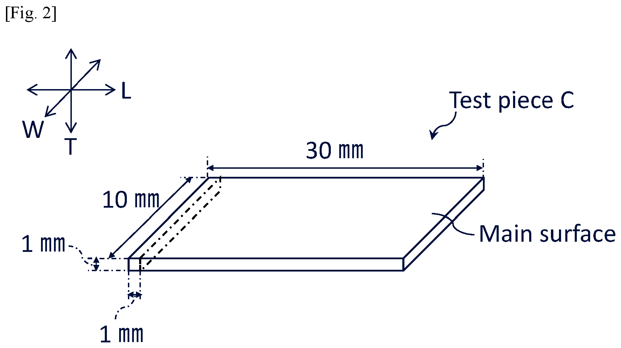

A test piece C made of a polyamide resin composition will be described. Fig. 1 is a partially enlarged view showing a cross section in the thickness direction of the test piece C made of a polyamide resin composition. In Fig. 1, the vertical direction indicates a T direction (thickness direction), and the horizontal direction indicates a W direction (width direction). The test piece C may be obtained by molding the polyamide resin composition, or may be cut out from a molded article of the polyamide resin composition. In Fig. 1, the upper surface of the test piece C is defined as a main surface. The main surface is defined as a starting point (0 $\mu m$), and a position (distance) in the test piece C in the T direction from the main surface is defined as a depth. Fig. 2 is a perspective view of a test piece C made of a polyamide resin composition. In Fig. 2, an L direction (length direction) is shown in addition to the T direction and the W direction. The test piece C has a length of 30 mm, a width of 10 mm, and a thickness of 1.0 mm from the viewpoint of unifying the sizes. When the test piece C has a length of 30 mm, a width of 10 mm, and a thickness of 1.0 mm, the cross section in the thickness direction of the test piece C is preferably a plane parallel to the width direction at a position of 1.0 mm (= 0.1 cm) from one end in the L direction (length direction) of the test piece C as shown in Fig. 2 from the viewpoint of unifying the cutting positions. When the test piece C is obtained by injection molding, it is more preferable to employ one end corresponding to the upstream side (gate side) in the macroscopic flow direction of the resin at the time of injection molding as one end in the length direction of the test piece C.

In the present embodiment, as the specific region, a region (region surrounded by a broken line in Fig. 1) having a depth of 250 $\mu m \pm 8.8$ $\mu m$ from a main surface of a test piece C having a length of 30 mm, a width of 10 mm, and a thickness of 1.0 mm made of a polyamide resin composition and a width of 25 $\mu m$ orthogonal to the thickness direction of the test piece C in the cross section in the thickness direction of the test piece C is adopted (hereinafter also referred to as a "surface layer region"). Note that 250 $\mu m \pm 8.8$ $\mu m$ means 241.2 to 258.8 $\mu m$. From the viewpoint of unifying the position of the surface layer region, the midpoint of the width orthogonal to the thickness direction of the test piece C is preferably the central position in the width direction of the test piece C. That is, it is preferable that the surface layer region is a region having a depth of 250 $\mu m \pm 8.8$ $\mu m$ from a main surface of a test piece C having a length of 30 mm, a width of 10 mm, and a thickness of 1.0 mm made of a polyamide resin composition and a width of 25 $\mu m$ orthogonal to the thickness direction with the central position in the width direction of the test piece C as the midpoint in the cross section in the thickness direction of the test piece C. Thus, information on the cross-sectional area of the particles of the bromine-based flame retardant (B) in the surface layer region of the test piece can be obtained. The main surface of the test piece is the starting point of the depth. In a case where the test piece C is obtained by injection molding, from the viewpoint of unifying the starting point in the thickness direction, it is preferable that a surface (so-called upper surface) which is vertically above the flow direction of the macroscopic resin at the time of injection molding is adopted as the main surface. In addition, when the test piece C is cut out from the molded article of the polyamide resin composition, it is preferable that the test piece C is cut out so as to include the surface of the molded article, and the surface is used as the main surface.

Since the smaller the particles of the bromine-based flame retardant (B) in the surface layer region, the more the occurrence of blisters can be suppressed, in the resin composition according to one embodiment of the present invention, the number-average value As ($\mu m^2$) of the cross-sectional area of the particles of the bromine-based flame retardant (B) observed in the surface layer region in the formula (1) is preferably less than 0.10 $\mu m^2$, more preferably 0.09 $\mu m^2$ or less, still more preferably 0.08 $\mu m^2$ or less, yet still more preferably 0.06 $\mu m^2$ or less, and even yet still more preferably 0.05 $\mu m^2$ or less. As described above, the value of the number-average value As of the cross-sectional area can be acquired by performing image analysis on the SEM image by the method described in Examples which will be described later.

Since the smaller the particles of the bromine-based flame retardant (B) in the surface layer region, the more the occurrence of blisters can be suppressed, in the resin composition according to one embodiment of the present invention, the number-average value EqD of the diameters of perfect circles having the same area as the particles of the bromine-based flame retardant (B) observed in the surface layer region in the formula (2) is preferably 0.40 $\mu m$ or less, more preferably 0.35 $\mu m$ or less, still more preferably 0.31 $\mu m$ or less, and yet still more preferably 0.22 $\mu m$ or less. As described above, the number-average value EqD ($\mu m$) can be acquired as a value of EqD by performing image analysis on the SEM image by the method described in Examples which will be described later.

In the present embodiment, both Rs1 and Rs2 include information relating to the Feret's diameter, in particular, information relating to (bs/as). The information relating to the Feret's diameter, in particular, information relating to (bs/as) can be acquired by performing image analysis on the SEM image by the method described in Examples which will be described later.

The Feret's diameter usually refers to a distance between two parallel tangent lines along a predetermined orientation with respect to a particle of an image analysis target (also simply referred to as an "object"). In the image analysis, the minimum Feret's diameter can be specified from the obtained Feret's diameters by changing the angle every 18° with the horizontal direction of the image as 0°. In the present embodiment, the Feret's diameter is a two dimensional Feret's diameter because the above-described path in the cross section in the thickness direction of the test piece is taken into consideration.

When the surface layer region of the test piece C is observed, a scanning electron microscope (SEM) is preferably used, and a field emission scanning electron microscope (FE-SEM) is more preferably used. In addition, the obtained image is preferably subjected to image analysis, and "Avizo 3D" manufactured by Thermo Fisher Scientific is preferably used as software for image analysis.

When the bromine-based flame retardant (B) is blended together with other components and subjected to shearing by melt blending or shearing by injection molding, the average diameter of the bromine-based flame retardant (B) is usually reduced. On the other hand, in the process of cooling the bromine-based flame retardant (B) after injection molding, the particles of the bromine-based flame retardant (B) may take a stretched shape along the direction in which the stress is applied by aggregation or being affected by internal stress (for example, pressure in the flow direction of the resin and stress due to variation in the arrangement direction of the inorganic filler (C)). Therefore, when the cross section is observed, the particles of the bromine-based flame retardant (B) contained in the molded article of the polyamide resin composition according to the present embodiment tend to have a number-average value of bs/as of greater than 1, in particular, 1.4 or more. Further, when the cross section is observed, the particles of the bromine-based flame retardant (B) contained in the molded article of the polyamide resin composition according to the present embodiment tend to have large values of As and EqD $\times \pi$.

However, even in the case where the particles of the bromine-based flame retardant (B) have a value of 1.4 or more in terms of bs/as, when the particle size is sufficiently small, the particles hardly greatly inhibit the above-described path or hardly serve as a starting point of minute fracture. Therefore, in one embodiment of the present invention, the cross-sectional area of the particles of the bromine-based flame retardant (B) present in a specific region is expressed by the above formula (1). In the formula (1), the reason why bs/as is multiplied by the cross-sectional area is that as the flame retardant is stretched, the possibility of inhibiting the diffusion of the gas or becoming a starting point of minute fracture increases. Similarly, in one embodiment of the present invention, the circumference of a perfect circle having the same area as the cross-sectional area of the particles of the bromine-based flame retardant (B) present in a specific region is expressed by the above formula (2) as EqD $\times \pi$. In the formula (2), the reason why bs/as is multiplied by EqD $\times \pi$ is that as the flame retardant is stretched, the possibility of inhibiting the diffusion of the gas or becoming a starting point of minute fracture increases. Then, Rs1 and Rs2, which are values obtained from these formulas, are respectively smaller than the above-described specific values, so that the above-described problem can be solved.

With regard to the present embodiment, even in the case where the particles of the bromine-based flame retardant (B) take an extended shape, when the particle size is sufficiently small, the particles hardly greatly inhibit the above-described path or hardly serve as a starting point of minute fracture. Therefore, in one embodiment of the present invention, the cross-sectional area of the particles of the bromine-based flame retardant (B) present in a specific region is expressed by As. Similarly, in one embodiment of the present invention, the circumference of a perfect circle having the same area as the cross-sectional area of the particles of the bromine-based flame retardant (B) present in a specific region is expressed by EqD $\times \pi$. Then, when these values are smaller than specific values, the above-described problem can be solved.

Hereinafter, each component of the polyamide resin composition according to the present embodiment will be described.

[Polyamide (A)]

The polyamide (A) used in the present embodiment has a melting point of 280°C or higher and contains a diamine unit.

The diamine unit contains 50 to 100 mol% of an aliphatic diamine unit having 4 to 18 carbon atoms. When the diamine unit contains 50 to 100 mol% of an aliphatic diamine unit having 4 to 18 carbon atoms, a molded article having excellent blister resistance even when exposed to a high temperature during a reflow process is obtained. The content of the aliphatic diamine unit having 4 to 18 carbon atoms in the diamine unit is preferably 75 to 100 mol%, and more preferably 85 to 100 mol%.

The polyamide (A) may be one kind or two or more kinds.

Examples of the aliphatic diamine having 4 to 18 carbon atoms constituting the aliphatic diamine unit having 4 to 18 carbon atoms include linear aliphatic diamine such as 1,4-butanediamine, 1,5-pentanediamine, 1,6-hexanediamine, 1,7-heptanediamine, 1,8-octanediamine, 1,9-nonanediamine, 1,10-decanediamine, 1,11-undecandiamine, and 1,12-dodecanediamine; and branched aliphatic diamine such as 1-butyl-1,2-ethanediamine, 1,1-dimethyl-1,4-butanediamine, 1-ethyl-1,4-butanediamine, 1,2-dimethyl-1,4-butanediamine, 1,3-dimethyl-1,4-butanediamine, 1,4-dimethyl-1,4-butanediamine, 2,3-dimethyl-1,4-butanediamine, 2-methyl-1,5-pentanediamine, 3-methyl-1,5-pentanediamine, 2,5-dimethyl-1,6-hexanediamine, 2,4-dimethyl-1,6-hexanediamine, 3,3-dimethyl-1,6-hexanediamine, 2,2-dimethyl-1,6-hexanediamine, 2,2,4-trimethyl-1,6-hexanediamine, 2,4,4-trimethyl-1,6-hexanediamine, 2-propyl-1,6-hexanediamine, 2,4-diethyl-1,6-hexanediamine, 2,2-dimethyl-1,7-heptanediamine, 2,3-dimethyl-1,7-heptanediamine, 2,4-dimethyl-1,7-heptanediamine, 2,5-dimethyl-1,7-heptanediamine, 2-ethyl-1,7-heptandiamine, 2-methyl-1,8-octanediamine, 3-methyl-1,8-octanediamine, 4-methyl-1,8-octanediamine, 1,3-dimethyl-1,8-heptanediamine, 1,4-dimethyl-1,8-octanediamine, 2,4-dimethyl-1,8-octanediamine, 3,4-dimethyl-1,8-octanediamine, 4,5-dimethyl-1,8-octanediamine, 2,2-dimethyl-1,8-octanediamine, 3,3-dimethyl-1,8-octanediamine, 4,4-dimethyl-1,8-octanediamine, and 5-methyl-1,9-nonanediamine. Among these, from the viewpoint of excellent physical properties such as heat resistance and low water absorption, at least one selected from the group consisting of 1,4-butanediamine, 1,6-hexanediamine, 1,9-nonanediamine, 2-methyl-1,8-octanediamine, and 1,10-decanediamine is preferable, at least one selected from the group consisting of 1,9-nonanediamine, 2-methyl-1,8-octanediamine, and 1,10-decanediamine is more preferable, at least one selected from the group consisting of 1,9-nonanediamine and 2-methyl-1,8-octanediamine is still more preferable, and a combination of 1,9-nonanediamine and 2-methyl-1,8-octanediamine is yet still more preferable.

When 1,9-nonanediamine and 2-methyl-1,8-octanediamine are used in combination as the aliphatic diamine having 4 to 18 carbon atoms, from the viewpoint of heat resistance, the molar ratio of 1,9-nonanediamine to 2-methyl-1,8-octanediamine (1,9-nonanediamine/2-methyl-1,8-octanediamine) is preferably in the range of 95/5 to 40/60, more preferably in the range of 90/10 to 50/50, and still more preferably in the range of 90/10 to 60/40.

The polyamide (A) may contain a diamine unit other than the aliphatic diamine unit having 4 to 18 carbon atoms. Examples of the diamine constituting the other diamine unit include an aliphatic diamine having 2 or 3 carbon atoms, an aromatic diamine, and an alicyclic diamine. Examples of the aliphatic diamine having 2 or 3 carbon atoms include ethylenediamine, 1,2-propanediamine, and 1,3-propanediamine. Examples of the aromatic diamine include p-phenylenediamine, m-phenylenediamine, p-xylylenediamine, m-xylylenediamine, 4,4'-diaminodiphenylmethane, 4,4'-diaminodiphenylsulfone, and 4,4'-diaminodiphenylether. Examples of the alicyclic diamine include cyclohexanediamine, methylcyclohexane diamine, isophorone diamine, norbornane dimethylamine, and tricyclodecane dimethylamine.

These diamines may be used alone or in combination of two or more kinds thereof.

The polyamide (A) may further contain a constitutional unit derived from a polyvalent amine having a valency of 3 or more, such as bis(hexamethylene) triamine, within a range in which melt-molding is possible, as long as the effects of the present invention are not impaired.

In a case where the polyamide (A) contains other diamine units, the content thereof is preferably 50 mol% or less, more preferably 30 mol% or less, still more preferably 20 mol% or less, and yet still more preferably 10 mol% or less of all the diamine units constituting the polyamide (A).

The polyamide (A) contains an arbitrary dicarboxylic acid unit.

Examples of the dicarboxylic acid constituting the dicarboxylic acid unit include aliphatic dicarboxylic acids such as malonic acid, succinic acid, glutaric acid, adipic acid, pimelic acid, suberic acid, azelaic acid, sebacic acid, undecanedioic acid, dodecanedioic acid, dimethylmalonic acid, 2,2-diethylsuccinic acid, 2,2-dimethylglutaric acid, 2-methyladipic acid, and trimethyladipic acid; alicyclic dicarboxylic acids such as 1,3-cyclopentanedicarboxylic acid, 1,3-cyclohexanedicarboxylic acid, 1,4-cyclohexanedicarboxylic acid, cycloheptanedicarboxylic acid, cyclooctanedicarboxylic acid, and cyclodecanedicarboxylic acid; and aromatic dicarboxylic acids such as terephthalic acid, isophthalic acid, phthalic acid, 2,6-naphthalenedicarboxylic acid, 2,7-naphthalenedicarboxylic acid, 1,4-naphthalenedicarboxylic acid, 1,4-phenylenedioxydiacetic acid, 1,3-phenylenedioxydiacetic acid, diphenic acid, diphenylmethane-4,4'-dicarboxylic acid, diphenylsulfon-4,4'-dicarboxylic acid, and 4,4'-biphenyldicarboxylic acid. These dicarboxylic acids may be used alone or in combination of two or more kinds thereof.

The polyamide (A) may contain a constitutional unit derived from a polycarboxylic acid within a range that does not impair the effects of the present invention. Examples of the constitutional unit derived from a polycarboxylic acid include trimellitic acid, trimesic acid, and pyromellitic acid. It is preferable to contain the constitutional unit within a range that enables melt molding.

The dicarboxylic acid unit preferably contains a terephthalic acid unit in an amount of 50 mol% or more, more preferably 60 mol% or more, still more preferably 75 mol% or more, and may be 100 mol%. When the dicarboxylic acid unit contains a terephthalic acid unit in an amount of 50 mol% or more, a molded article having more excellent blister resistance can be obtained even when exposed to a high temperature during a reflow process. In one embodiment, the polyamide (A) contains a dicarboxylic acid unit, 50 mol% or more of the dicarboxylic acid unit in the polyamide (A) is a terephthalic acid unit, and the aliphatic diamine having 4 to 18 carbon atoms constituting the aliphatic diamine unit having 4 to 18 carbon atoms is at least one selected from the group consisting of 1,4-butanediamine, 1,6-hexanediamine, 1,9-nonanediamine, 2-methyl-1,8-octanediamine, and 1,10,-decanediamine.

From the viewpoint of increasing the degree of polymerization, the molar ratio of the dicarboxylic acid unit to the diamine unit [dicarboxylic acid unit/diamine unit] in the polyamide (A) is preferably 45/55 to 55/45, and more preferably 47/53 to 53/47.

The molar ratio of the dicarboxylic acid unit to the diamine unit can be adjusted according to the blending ratio (molar ratio) of a raw material dicarboxylic acid and a raw material diamine.

The total content of the dicarboxylic acid unit and the diamine unit in 100 mol% of the polyamide (A) is preferably 80 mol% or more, more preferably 90 mol% or more, still more preferably 95 mol% or more, and yet still more preferably 99 mol% or more, and may be 100 mol%.

It is preferable that 10% or more of the terminal groups of the molecular chain of the polyamide (A) are blocked with a terminal blocking agent. The ratio at which the terminal groups of the molecular chain are blocked by the terminal blocking agent (terminal blocking ratio) is more preferably 20% or more.

As the terminal blocking agent, a monofunctional compound having reactivity with an amino group or a carboxy group of a polyamide terminal can be used, and from the viewpoint of reactivity and safety of a blocked terminal, a monocarboxylic acid or a monoamine is preferable, and from the viewpoint of ease of handling, a monocarboxylic acid is more preferable. In addition, a monoisocyanate, a monoacid halide, a monoester, a monoalcohol, and the like can also be used as the terminal blocking agent.

As the monocarboxylic acid used as the terminal blocking agent, those having reactivity with an amino group can be used, and examples thereof can include aliphatic monocarboxylic acids such as acetic acid, propionic acid, butyric acid, valeric acid, caproic acid, caprylic acid, lauric acid, tridecanoic acid, myristic acid, palmitic acid, stearic acid, pivalic acid, and isobutyric acid; alicyclic monocarboxylic acids such as cyclohexanecarboxylic acid; aromatic monocarboxylic acids such as benzoic acid, toluic acid, α-naphthalenecarboxylic acid, β-naphthalenecarboxylic acid, methylnaphthalenecarboxylic acid, and phenylacetic acid; and arbitrary mixtures thereof. Among them, acetic acid, propionic acid, butyric acid, valeric acid, caproic acid, caprylic acid, lauric acid, tridecanoic acid, myristic acid, palmitic acid, stearic acid, and benzoic acid are preferable from the viewpoint of reactivity, stability of blocked terminals, and a price.

As the monoamine used as the terminal blocking agent, a monoamine having reactivity with a carboxy group can be used, and examples thereof can include aliphatic monoamines such as methylamine, ethylamine, propylamine, butylamine, hexylamine, octylamine, decylamine, stearylamine, dimethylamine, diethylamine, dipropylamine, and dibutylamine; alicyclic monoamines such as cyclohexylamine and dicyclohexylamine; aromatic monoamines such as aniline, toluidine, diphenylamine, and naphthylamine; and arbitrary mixtures thereof. Among them, butylamine, hexylamine, octylamine, decylamine, stearylamine, cyclohexylamine, and aniline are preferable from the viewpoints of reactivity, boiling point, stability of blocked terminals, and a price.

The terminal blocking ratio of the polyamide (A) is determined according to the following formula (I) by measuring the number of carboxy group terminals, amino group terminals, and terminal groups blocked by a terminal blocking agent present in the polyamide (A). The number of each terminal group is preferably determined from the integral value of a characteristic signal corresponding to each terminal group by $^1$H-NMR from the viewpoint of accuracy and simplicity.

$$\text{Terminal blocking ratio (\%)} = [(T - S)/T] \times 100 \qquad (I)$$

In the formula, T represents the total number of terminal groups in the molecular chain of the polyamide (A) (which is usually equal to twice the number of polyamide molecules), and S represents the total number of carboxy group terminals and amino group terminals remaining unblocked.

The polyamide (A) can be produced by using any method known as a method for producing a crystalline polyamide. For example, the polyamide (A) can be produced by a solution polymerization method or an interfacial polymerization method using a dicarboxylic acid in the form of an acid chloride and a diamine as raw materials, a melt polymerization method, a solid phase polymerization method, a melt extrusion polymerization method, or the like using a dicarboxylic acid and a diamine as raw materials.

The melting point of the polyamide (A) is 280°C or higher, preferably 290°C or higher, and more preferably 300°C or higher from the viewpoint of heat resistance and from the viewpoint of more remarkably exhibiting the effects of the present invention. On the other hand, the melting point is preferably 350°C or lower, more preferably 340°C or lower, and still more preferably 330°C or lower from the viewpoint of suppressing thermal decomposition or the like of the polyamide during melt molding.

In a case where two or more kinds of polyamides are used, the melting point of the polyamide (A) being 280°C or higher means that the melting point obtained as a weighted average value based on the melting point of each polyamide and the content (% by mass) of each polyamide with respect to 100% by mass of the total polyamide is 280°C or higher.

The melting point of the polyamide (A) can be obtained as the peak temperature of an endothermal peak that appears when temperature is raised at a rate of 10°C/minute using a differential scanning calorimetry (DSC) analyzer.

From the viewpoint of heat resistance, the glass transition temperature of the polyamide (A) is preferably 100°C or higher, more preferably 110°C or higher, and still more preferably 120°C or higher. The upper limit of the glass transition temperature of the polyamide (A) is not particularly limited, but is preferably 180°C or lower and more preferably 160°C or lower, and may be 150°C or lower, from the viewpoint of handleability. In other words, the glass transition temperature of the polyamide (A) is preferably 100 to 180°C, more preferably 110 to 160°C, and still more preferably 120 to 150°C.

The glass transition temperature of the polyamide (A) can be obtained as the temperature at an inflection point that appears when temperature is raised at a rate of 20°C/minute using a differential scanning calorimetry (DSC) analyzer.

The content (% by mass) of the polyamide (A) contained in the total amount of the polyamide resin composition of the present embodiment is preferably 20 to 70% by mass, more preferably 25 to 70% by mass, still more preferably 30 to 65% by mass, and yet still more preferably 30 to 50% by mass from the viewpoint of exhibiting mechanical properties and heat resistance of the polyamide.

[Bromine-Based Flame Retardant (B)]

The polyamide resin composition of the present embodiment contains a bromine-based flame retardant (B). By containing the bromine-based flame retardant (B), a polyamide resin composition having improved flame retardancy is obtained.

Examples of the bromine-based flame retardant (B) used in the present embodiment include hexabromocyclododecane, decabromodiphenyl oxide, octabromodiphenyl oxide, tetrabromobisphenol A, bis(tribromophenoxy) ethane, bis(pentabromophenoxy)ethane, tetrabromobisphenol A epoxy resin, tetrabromobisphenol A carbonate, ethylene(bistetrabromophthalic)imide, ethylene bispentabromodiphenyl, tris(tribromophenoxy)triazine, bis(dibromopropyl) tetrabromobisphenol A, bis(dibromopropyl) tetrabromobisphenol S, brominated polyphenylene ethers such as poly(di) bromophenylene ether, polydibromostyrene, polytribromostyrene, brominated polystyrene, polybrominated styrene, brominated cross-linked aromatic polymers, brominated epoxy resins, brominated phenoxy resins, brominated styrene-maleic anhydride polymers, tetrabromobisphenol S, tris(tribromoneopentyl) phosphate, polybromotrimethylphenylindane, and tris(dibromopropyl)-isocyanurate.

Examples of the brominated polystyrene include uncrosslinked and unmodified brominated polystyrene, cross-linked brominated polystyrene, and modified brominated polystyrene to which a functional group is added. Examples of the functional group include a functional group containing an epoxy group such as glycidyl methacrylate, and an acid anhydride group containing an $\alpha,\beta$-unsaturated dicarboxylic acid anhydride such as maleic anhydride or citraconic acid anhydride. The modification ratio is preferably 0.1 to 20% by mass, and more preferably 0.5 to 10% by mass. Similarly, examples of the polybrominated styrene include unmodified polybrominated styrene and modified polybrominated styrene to which a functional group is added. The functional group and the modification ratio in the modified polybrominated styrene are the same as those described above for the modified brominated polystyrene.

These bromine-based flame retardants (B) may be used alone or in combination of two or more kinds thereof. The bromine-based flame retardant (B) preferably includes at least one selected from the group of brominated polystyrenes and the group of polybrominated styrenes, more preferably includes one selected from the group of brominated polystyrenes and one selected from the group of polybrominated styrenes, and still more preferably includes a modified brominated polystyrene to which a functional group is added and one selected from the group of polybrominated styrenes.

The brominated polystyrene can be produced, for example, by a method of polymerizing a styrene monomer to produce polystyrene and then brominating the benzene ring of the polystyrene. The polybrominated styrene can be produced by a method of polymerizing a brominated styrene monomer (bromostyrene, dibromostyrene, tribromostyrene, or the like).

The bromine content in each of the brominated polystyrene and the polybrominated styrene is preferably 55 to 75% by mass, and more preferably 55 to 70% by mass. By setting the bromine content to 55% by mass or more, it is possible to satisfy the bromine content required for flame retardancy with a small content of brominated polystyrene and polybrominated styrene, suppress deterioration of mechanical properties, and obtain a molded article having excellent mechanical properties and heat resistance. On the other hand, by setting the bromine content to 75% by mass or less, it is possible to obtain a molded article having excellent heat resistance and color change properties, in which thermal decomposition does not easily occur during melt processing such as extrusion or molding and gas generation can be suppressed.

The content (% by mass) of the bromine-based flame retardant (B) contained in the total amount of the polyamide resin composition of the present embodiment is preferably 10 to 40% by mass, more preferably 12 to 35% by mass, and still more preferably 15 to 30% by mass from the viewpoint of obtaining a molded article having excellent flame retardancy.

The content of the bromine-based flame retardant (B) is preferably 25 to 70 parts by mass, more preferably 30 to 65 parts by mass, and still more preferably 35 to 60 parts by mass with respect to 100 parts by mass of the polyamide (A). When the content of the bromine-based flame retardant (B) is 25 parts by mass or more, a molded article having excellent flame retardancy can be obtained. On the other hand, when the content of the bromine-based flame retardant (B) is 70 parts by mass or less, a molded article having excellent blister resistance even when exposed to a high temperature during a reflow process and having excellent flame retardancy and mechanical properties can be obtained. When a plurality of kinds of bromine-based flame retardants (B) are used, the total amount thereof may be in the above-mentioned range.

[Inorganic Filler (C)]

The polyamide resin composition of the present embodiment contains an inorganic filler (C). Examples of the inorganic filler (C) include carbon nanotubes, fullerene, talc, wollastonite, zeolite, sericite, mica, kaolin, clay, pyrophyllite, silica, bentonite, alumina silicate, silicon oxide, magnesium oxide, alumina, magnesium carbonate, dolomite, calcium sulfate, calcium hydroxide, magnesium hydroxide, milled fiber, glass powder, ceramic beads, boron nitride, silicon carbide, various clay minerals such as halloysite and vermiculite, and glass fibers. These inorganic fillers (C) may be used alone or in combination of two or more kinds thereof.

From the viewpoint of enhancing the mechanical properties of the molded article of the polyamide resin composition, the inorganic filler (C) preferably includes glass fibers or wollastonite, more preferably includes glass fibers (C1), and still more preferably glass fibers (C1).

As the glass fibers (C1), the following ones are preferably used. The average fiber length of the glass fibers (C1) is preferably 1 to 10 mm, more preferably 1 to 7 mm, and still more preferably 2 to 4 mm.

The average fiber diameter of the glass fibers (C1) is preferably 6 to 20 $\mu$m, and more preferably 6 to 15 $\mu$m, from the viewpoint of obtaining a molded article having excellent blister resistance and mechanical properties. It is known that the blister resistance is better when the average fiber diameter of the glass fibers (C1) is smaller, but in the present invention, glass fibers (C1) having a relatively large average fiber diameter can also be used. Therefore, the average fiber diameter of the glass fibers (C1) is still more preferably 9 to 13 $\mu$m, and yet still more preferably 10 to 12 $\mu$m.

The average fiber length and the average fiber diameter of the glass fibers (C1) can be determined by measuring, through image analysis using an electronic microscope, fiber lengths and fiber diameters of arbitrarily selected 400 fibers of the glass fibers (C1), and calculating respective average values.

In addition, the average fiber length and the average fiber diameter of the glass fibers (C1) in the polyamide resin composition or the molded article can be determined by, for example, dissolving the polyamide resin composition or the molded article in an organic solvent, extracting the glass fibers (C1), and image analysis using an electron microscope in the same manner as described above.

Examples of the cross-sectional shape of the glass fibers (C1) include a round shape (circular shape), a rectangular shape, an oval shape which is almost a rectangular shape, an elliptic shape, a cocoon shape, and a cocoon shape in which the central portion in the longitudinal direction is narrowed. Among these, the glass fibers (C1) preferably have a cross-sectional shape of a round shape (circular shape), a rectangular shape, an oval shape which is almost a rectangular shape, an elliptic shape, or a cocoon shape, and more preferably have a cross-sectional shape of a round shape (circular shape).

The glass fibers (C1) may contain at least one surface treatment agent selected from the group consisting of a coupling agent and a sizing agent. For example, the glass fibers (C1) may contain a sizing agent. In addition, the glass fibers (C1) may contain a coupling agent and a sizing agent. The glass fibers (C1) preferably contain a surface treatment agent on the surface thereof. The adhesion amount of the surface treatment agent is usually preferably 0.01% by mass or more with respect to the total mass of the glass fibers (C1) (that is, the total amount of the glass fibers (C1) and the surface treatment agent). From the viewpoint of blister resistance, the adhesion amount is preferably 0.01% by mass or more and 2.0% by mass or less, more preferably 0.2% by mass or more and 0.9% by mass or less, and still more preferably 0.3% by mass or more and 0.5% by mass or less.

Examples of the coupling agent include a silane coupling agent and a titanium coupling agent. Examples of the silane coupling agent include $\gamma$-methacryloxypropyltrimethoxysilane, $\gamma$-glycidoxypropyltrimethoxysilane, and $\gamma$-amino-propyltriethoxysilane.

Examples of the sizing agent include a urethane resin-based sizing agent, an acrylic resin-based sizing agent, an epoxy resin-based sizing agent, and an acid anhydride group-containing resin-based sizing agent. However, when the urethane resin-based sizing agent, the acrylic resin-based sizing agent, and the epoxy resin-based sizing agent contain an acid anhydride group, they are regarded as belonging to the acid anhydride group-containing resin-based sizing agent. The acid anhydride group-containing resin-based sizing agent is composed of at least a resin containing an acid anhydride group, and is preferably composed of a copolymer containing an acid anhydride group. From the viewpoint of obtaining a molded article having more excellent blister resistance and from the viewpoint of obtaining a molded article having more excellent mechanical properties, it is preferable that the sizing agent includes at least one selected from the group consisting of an epoxy resin-based sizing agent and an acid anhydride group-containing resin-based sizing agent. From the viewpoint of obtaining a molded article having further excellent blister resistance, it is preferable that the sizing agent includes an epoxy resin-based sizing agent. From the viewpoint of obtaining a molded article having further excellent fluidity, it is preferable that the sizing agent includes a urethane resin-based sizing agent. It is considered that the selection of an appropriate surface treatment agent for the glass fibers (C1) contributes to providing the molded article with a strength capable of withstanding the internal pressure of water vapor even under the peak temperature condition of the reflow process.

The content of the inorganic filler (C) is preferably 30 to 250 parts by mass, more preferably 35 to 200 parts by mass, still more preferably 40 to 150 parts by mass, and yet still more preferably 45 to 100 parts by mass with respect to 100 parts by mass of the polyamide (A). When the content of the inorganic filler (C) is 30 parts by mass or more, a molded article having more excellent mechanical properties can be obtained, and when the content is 250 parts by mass or less, shear heat generation during melt-kneading can be suppressed.

[Aromatic Vinyl-based Copolymer (D)]

From the viewpoint of obtaining a flame-retardant polyamide resin molded article having excellent blister resistance, the polyamide resin composition of the present embodiment contains an aromatic vinyl-based copolymer (D) (hereinafter, also referred to as "copolymer (D)"). As a result, Rs1 represented by the aforementioned formula (1) can be maintained at a value smaller than 0.2 $\mu m^2$. In addition, Rs2 represented by the aforementioned formula (2) can be maintained at a value smaller than 1.7 $\mu m$. In one embodiment of the present invention, the aforementioned As can be made smaller than 0.1 $\mu m^2$. In addition, in one embodiment of the present invention, the aforementioned EqD $\times \pi$ can be made smaller than 1.0 $\mu m$. This can be understood from the comparison of Examples and Comparative Examples illustrated in the section of Examples. As one of the factors that the copolymer (D) brings about such an action, it is considered that the copolymer (D) increases the compatibility between the components in the polyamide resin composition, and as a result, the aggregation of the particles of the bromine-based flame retardant (B), which is likely to occur during cooling, is suppressed.

From the viewpoint of flame retardancy, heat resistance, and moldability, the copolymer (D) preferably contains a constitutional unit derived from at least one selected from the group consisting of styrene and $\alpha$-methylstyrene and a constitutional unit derived from at least one selected from the group consisting of maleic anhydride and monoalkylmaleic anhydride having an alkyl group having 1 to 3 carbon atoms, and more preferably contains a constitutional unit derived from styrene and a constitutional unit derived from maleic anhydride.

The content of the constitutional unit derived from at least one selected from the group consisting of maleic anhydride and monoalkylmaleic anhydride having an alkyl group having 1 to 3 carbon atoms in the copolymer (D) is preferably 3 to 50% by mass, more preferably 5 to 50% by mass, still more preferably 18 to 50% by mass, and yet still more preferably 18 to 45% by mass from the viewpoint of flame retardancy, heat resistance, and moldability.

The copolymer (D) may further have a constitutional unit other than the constitutional unit derived from at least one selected from the group consisting of styrene and $\alpha$-methylstyrene, and the constitutional unit derived from at least one selected from the group consisting of maleic anhydride and monoalkylmaleic anhydride having an alkyl group having 1 to 3 carbon atoms. The total content of the constitutional unit derived from at least one selected from the group consisting of styrene and $\alpha$-methylstyrene and the constitutional unit derived from at least one selected from the group consisting of maleic anhydride and monoalkylmaleic anhydride having an alkyl group having 1 or more and 3 or less carbon atoms in the copolymer (D) is preferably 80% by mass or more, more preferably 90% by mass or more, and still more preferably 100% by mass.

The glass transition temperature of the copolymer (D) is preferably 120°C or higher, more preferably 120°C to 200°C, still more preferably 125°C to 180°C, and yet still more preferably 125°C to 160°C. When the glass transition temperature of the copolymer (D) is 120°C or higher, the flame retardancy and heat resistance can be further enhanced, and when the glass transition temperature is 200°C or lower, the thermal decomposition and the like of the polyamide during melt molding can be suppressed.

The glass transition temperature of the copolymer (D) can be obtained as the temperature at an inflection point that appears when temperature is raised at a rate of 20°C/minute using a differential scanning calorimetry (DSC) analyzer.

The weight-average molecular weight (Mw) of the copolymer (D) is preferably 10,000 to 500,000, more preferably 20,000 to 400,000, still more preferably 30,000 to 300,000, and yet still more preferably 50,000 to 200,000 from the viewpoint of flame retardancy and heat resistance.

The weight-average molecular weight (Mw) of the copolymer (D) is measured by gel permeation chromatography (GPC) in terms of polystyrene.

From the viewpoint of imparting compatibility with the polyamide (A), the acid value of the copolymer (D) is preferably 200 to 400 mg KOH/g, and more preferably 250 to 350 mg KOH/g. The acid value can be measured by near-infrared spectroscopy or a neutralization test using potassium hydroxide.

The copolymer (D) may be a commercially available product or may be synthesized by a known method. In addition, the bonding form of the constitutional unit derived from at least one selected from the group consisting of styrene and $\alpha$-methylstyrene and the constitutional unit derived from at least one selected from the group consisting of maleic anhydride and monoalkylmaleic anhydride having an alkyl group having 1 or more and 3 or less carbon atoms is not particularly limited, and may be any form of random polymerization, block polymerization, and graft polymerization.

From the viewpoint of obtaining a flame-retardant polyamide resin molded article having excellent blister resistance, the content of the copolymer (D) is preferably 0.1 to 10 parts by mass, more preferably 0.5 to 8 parts by mass, still more preferably 0.8 to 5 parts by mass, yet still more preferably 1.0 to 4 parts by mass, and most preferably 1.2 to 3 parts by mass with respect to 100 parts by mass of the polyamide (A).

[Colorant (E)]

When the polyamide resin composition of the present embodiment contains the colorant (E), visibility and decorativeness are imparted.

The colorant (E) used in the present embodiment is at least one of an organic colorant and an inorganic colorant. The colorant (E) may be used alone or may be used in combination of two or more types thereof.

Examples of the organic colorant include organic dyes such as anthraquinone-based dyes, perinone-based dyes, anthrapyridone-based dyes, methine-based dyes, azine-based dyes, azo-based dyes, azomethine-based dyes, phthalocyanine-based dyes, quinoneimine-based dyes, quinoline-based dyes, nitro-based dyes, indigo-based dyes, and oxazine-based dyes; and organic pigments such as azo-based pigments such as azo lake pigments, insoluble monoazo pigments, insoluble disazo pigments, and chelate azo pigments, phthalocyanine-based pigments, perylene-based pigments, perinone-based pigments, anthraquinone-based pigments, quinacridone-based pigments, dioxazine-based pigments, thioindigo-based pigments, isoindolinone-based pigments, quinophthalone-based pigments, diketopyrrolopyrrole-based pigments, benzimidazolone-based pigments, and threne-based pigments.

Among these, from the viewpoint of heat resistance, color developability, and compatibility, at least one selected from the group consisting of an anthraquinone-based dye, a perinone-based dye, an anthrapyridone-based dye, a phthalocyanine-based dye, an azo-based pigment, and a phthalocyanine-based pigment is preferable, and at least one selected from the group consisting of an anthraquinone-based dye, a perinone-based dye, an anthrapyridone-based dye, and a phthalocyanine-based dye is more preferable. In addition, from the same viewpoint, a quinoline-based dye, an anthraquinone-based dye, a perinone-based dye, an anthrapyridone-based dye, a phthalocyanine-based dye, an azo-based pigment, and a phthalocyanine-based pigment are preferable, and at least one selected from the group consisting of a quinoline-based dye, an anthraquinone-based dye, a perinone-based dye, and a phthalocyanine-based pigment is more preferable.

Examples of the inorganic colorant include black inorganic pigments such as carbon black, lamp black, acetylene black, bone black, thermal black, channel black, furnace black, and titanium black; metal oxides such as titanium oxide ($TiO$, $Ti_2O_3$, $TiO_2$), zinc oxide ($Pb_3O_4$), iron oxide ($Fe_2O_3$), antimony oxide, and zirconium oxide (zircon oxide); metal sulfides such as zinc sulfide; and complex metal oxides including a plurality of oxides such as ultramarine (Pigment Blue 29), zinc phosphate, barium sulfate, manganese phosphate, cobalt aluminate, cobalt stannate, cobalt zincate, antimony oxide, antimony sulfide, cerium sulfide, lanthanum sulfide, chromium oxide, zinc chromate, and nickel-based, bismuth-based, vanadium-based, molybdenum-based, cadmium-based, titanium-based, zinc-based, manganese-based, cobalt-based, iron-based, chromium-based, antimony-based, magnesium-based, and aluminum-based oxides.

Among these, from the viewpoint of heat resistance, at least one selected from the group consisting of a black inorganic pigment, a metal oxide, a metal sulfide, and a complex metal oxide is preferable, and at least one selected from the group consisting of carbon black, a metal oxide, a metal sulfide, and a complex metal oxide is more preferable. From the viewpoint of providing a molded article having a color other than black, it is preferable to use at least one selected from the group consisting of a metal oxide, a metal sulfide, and a complex metal oxide.

When the colorant (E) contains an organic colorant, the content of the organic colorant is preferably 0.0001 to 0.5% by mass, more preferably 0.001 to 0.5% by mass, and still more preferably 0.005 to 0.5% by mass with respect to 100% by mass of the polyamide resin composition of the present embodiment, from the viewpoint of flame retardancy, color developability, and mechanical properties.

When the colorant (E) contains an inorganic colorant, the content of the inorganic colorant is preferably 0.001 to 5.0% by mass, more preferably 0.01 to 5.0% by mass, and still more preferably 0.1 to 5.0% by mass with respect to 100% by mass of the polyamide resin composition of the present embodiment, from the viewpoint of flame retardancy, color developability, and mechanical properties.

The content of the colorant (E) is preferably 0.0005 to 20 parts by mass, more preferably 0.001 to 15 parts by mass, still more preferably 0.01 to 10 parts by mass, yet still more preferably 0.1 to 5 parts by mass, and even yet still more preferably 0.2 to 1 part by mass with respect to 100 parts by mass of the polyamide (A). When the content of the colorant (E) is 0.0005 parts by mass or more, a color having high visibility can be developed, and when the content of the colorant (E) is 20 parts by mass or less, deterioration of the mechanical properties of the molded article can be suppressed.

In the polyamide resin composition of the present embodiment, ΔE represented by the following formula (3) is preferably larger than 1 from the viewpoint of satisfying specifications required for applications for automotive parts and applications for electric/electronic parts. From the viewpoint of enhancing visibility, ΔE is more preferably larger than 3, still more preferably larger than 10, and yet still more preferably larger than 30.

In order to satisfy this requirement, the inorganic filler (C) and the colorant (E) contained in the polyamide resin composition of the present embodiment are preferably selected.

[Math. 2]

$$\Delta E = \left[ (L^{*}_{col} - L^{*}_{nat})^2 + (a^{*}_{col} - a^{*}_{nat})^2 + (b^{*}_{col} - b^{*}_{nat})^2 \right]^{1/2}$$
$$(X)$$

In the formula (X), ΔE is a color difference defined by the CIE1976 (L*a*b*) color system.

$L^*_{col}$, $a^*_{col}$, and $b^*_{col}$ are L*, a*, and b* defined by the CIE1976 (L*a*b*) color system of the polyamide resin composition according to the present embodiment. That is, in L*, a*, and b* defined by the CIE1976 ((L*a*b*) color system of the polyamide resin composition according to the present embodiment, L* is $L^*_{col}$, a* is $a^*_{col}$, and b* is $b^*_{col}$.

$L^*_{nat}$, $a^*_{nat}$, and $b^*_{nat}$ are L*, a*, and b* defined by the CIE1976 (L*a*b*) color system of a colorant-free polyamide resin composition having the same composition as the polyamide resin composition except that the colorant (E) is not contained. That is, L* is $L^*_{nat}$, a* is $a^*_{nat}$, and b* is $b^*_{nat}$ in L*, a*, and b* defined by the CIE1976 (L*a*b*) color system of a colorant-free polyamide resin composition having the same composition as the polyamide resin composition except that the colorant (E) is not contained.

The ΔE can be obtained by the following method. A polyamide resin composition of the present embodiment and a colorant-free polyamide resin composition having the same composition as the polyamide resin composition of the present embodiment except that the colorant (E) is not contained are prepared, and a dumbbell-shaped tensile test piece (type A1) of each resin composition is prepared by a method in accordance with JIS K7139:2009. An image of each test piece is acquired using a colorimeter, L*a*b* of each test piece is obtained from the image, and ΔE can be obtained. More specifically, it can be obtained by the method described in Examples which will be described later.

[Flame Retardant Aid (F)]

The polyamide resin composition of the present embodiment may further contain a flame retardant aid (F). By using the flame retardant aid (F) in combination with the bromine-based flame retardant (B), the obtained molded article can exhibit more excellent flame retardancy.

Examples of the flame retardant aid (F) include antimony-based compounds such as antimony oxides such as diantimony trioxide, diantimony tetroxide, and diantimony pentoxide, and antimonates such as sodium antimonate; melamine-based compounds such as melamine orthophosphate, melamine pyrophosphate, melamine borate, and melamine polyphosphate; tin oxides such as tin monoxide and tin dioxide; iron oxides such as ferric oxide and γ-iron oxide; metal oxides such as manganese oxide, molybdenum oxide, cobalt oxide, bismuth oxide, tin oxide, nickel oxide, copper oxide, and tungsten oxide; metal hydroxides such as aluminum hydroxide; powders of metals such as aluminum, iron, titanium, manganese, zinc, molybdenum, cobalt, bismuth, chromium, tin, antimony, nickel, copper, and tungsten; metal carbonates such as zinc carbonate and barium carbonate; metal borates such as zinc borate and calcium borate; zinc stannates such as zinc tin trioxide; and silicone. However, those corresponding to the inorganic filler (C) and the colorant (E) are excluded. These may be used alone or in combination of two or more kinds thereof.

Among the above, at least one selected from the group consisting of antimony-based compounds, melamine-based compounds, metal oxides, metal hydroxides, metal borates, and zinc stannates is preferable, and at least one selected from the group consisting of diantimony trioxide, diantimony tetroxide, diantimony pentoxide, sodium antimonate, melamine orthophosphate, melamine pyrophosphate, melamine borate, melamine polyphosphate, aluminum hydroxide, zinc borate, and zinc tin trioxide is more preferable.

The flame retardant aid (F) is preferably contained in the polyamide resin composition of the present embodiment in the form of powder. The upper limit of the average particle diameter of the flame retardant aid (F) is preferably 30 μm, more preferably 15 μm, still more preferably 10 μm, and particularly preferably 7 μm. On the other hand, the lower limit of the average particle diameter of the flame retardant aid (F) is preferably 0.01 μm. When the average particle diameter is 0.01 to 30 μm, the flame retardancy of the obtained molded article is improved.

In the description herein, the "average particle diameter" means a volume average particle diameter, and can be determined from a particle diameter (50% particle diameter D50) at which an integrated volume becomes 50% in a particle size distribution measured by using a laser diffraction type particle size distribution measuring device.

In the case where the polyamide resin composition of the present embodiment contains the flame retardant aid (F), the content of the flame retardant aid (F) is preferably 1 to 20 parts by mass, more preferably 2 to 18 parts by mass, still more preferably 3 to 15 parts by mass, and yet still more preferably 4 to 10 parts by mass with respect to 100 parts by mass of the polyamide (A). Accordingly, the above-described effects can be remarkably exhibited.

[Other Components]

The polyamide resin composition of the present embodiment may include other components as necessary in addition to the polyamide (A), the bromine-based flame retardant (B), the inorganic filler (C), the aromatic vinyl-based copolymer (D), the colorant (E) described above, and the flame retardant aid (F) used as necessary.

Examples of the other components include a stabilizer such as a copper compound; an antioxidant such as a hindered phenol-based antioxidant, a hindered amine-based antioxidant, a phosphorus-based antioxidant, and a thio-based antioxidant; an ultraviolet absorber; a light stabilizer; an antistatic agent; a heat stabilizer; a crystal nucleating agent; a plasticizer; a lubricant; a release agent; a lubricant; a dispersant; an oxygen absorber; a hydrogen sulfide adsorbent; a crystallization retarder; an impact modifier such as an $\alpha$-olefin-based copolymer and rubber; and a drip preventing agent such as a fluororesin.

The content of the above-mentioned other components is not particularly limited as long as the effects of the present invention are not impaired, but is preferably 0.02 to 200 parts by mass, more preferably 0.03 to 100 parts by mass, still more preferably 0.05 to 50 parts by mass, and yet still more preferably 0.1 to 20 parts by mass with respect to 100 parts by mass of the polyamide (A).

The total content of the polyamide (A), the bromine-based flame retardant (B), the inorganic filler (C), the aromatic vinyl-based copolymer (D), and the colorant (E) in the total amount of the polyamide resin composition of the present embodiment is preferably 70% by mass or more, more preferably 80% by mass or more, still more preferably 85% by mass or more, and yet still more preferably 90% by mass or more.

The polyamide resin composition of the present embodiment preferably contains the bromine-based flame retardant (B) in an amount of 25 to 70 parts by mass, the inorganic filler (C) in an amount of 30 to 250 parts by mass, the aromatic vinyl-based copolymer (D) in an amount of 0.1 to 10 parts by mass, and the colorant (E) in an amount of 0.0005 to 20 parts by mass with respect to 100 parts by mass of the polyamide (A).

(Method for Producing Polyamide Resin Composition)

The method for producing the polyamide resin composition is not particularly limited, and a known method can be used. For example, a method of melt-kneading the polyamide (A), the bromine-based flame retardant (B), the inorganic filler (C), the aromatic vinyl-based copolymer (D), the colorant (E), and, if necessary, the flame retardant aid (F) and the above-mentioned other components may be mentioned.

The method of melt-kneading is not particularly limited, and a method capable of uniformly mixing the above-mentioned components can be preferably adopted. For example, a single screw extruder, a twin screw extruder, a kneader, a Banbury mixer, or the like is preferably used. The melt-kneading conditions are not particularly limited as long as the particle size of the particles of the bromine-based flame retardant (B) can be sufficiently reduced, and examples thereof include a method of melt-kneading for about 1 to 30 minutes in a temperature range of about 10 to 50°C higher than the melting point of the polyamide (A).

<Molded Article>

Molded articles can be obtained by subjecting the polyamide resin composition, for example, in the form of pellets to various molding methods. The molding method of the molded article may be appropriately selected depending on the application, and a method such as injection molding, extrusion molding, hollow molding, compression molding, press molding, or calender molding can be adopted. When a component such as a connector is produced, injection molding is preferred. The molded article of the polyamide resin composition according to the present embodiment is preferably an injection molded article.

In particular, since the polyamide resin composition of the present embodiment provides a flame-retardant polyamide resin molded article having excellent blister resistance even when exposed to a high temperature during a reflow process, the molded article is suitable as an injection molded article used for an application having a surface mounting process (hereinafter, also referred to as an "SMT process").

A commercially available injection molding machine can be used for the injection molding. The injection molding can be performed, for example, at an injection speed of 60 mm/s, a holding pressure of 60 MPa, a holding time of 1.0 seconds, a cooling time of 4.0 seconds, and a cycle time of 11.0 seconds. Depending on the composition, the injection time is about 0.15 seconds and the filling pressure is about 60 MPa. The temperatures for the cylinder can be set to, for example, 320°C, 320°C, 320°C, 320°C, and 300°C in order from the cylinder nozzle. Preferably, by performing the injection molding in this manner, a molded article in which the aforementioned Rs1 satisfies a specific range can be obtained. Similarly, a molded article in which the aforementioned Rs2 satisfies a specific range can be obtained. Similarly, a molded article in which the aforementioned As satisfies a specific range can be obtained. Similarly, a molded article in which the aforementioned EqD $\times \pi$ satisfies a specific range can be obtained.

<Applications>

The molded article of the polyamide resin composition of the present embodiment can be used as various molded bodies for electric parts, electronic parts, automobile parts, industrial parts, water faucet parts, fibers, films, sheets, household goods, leisure goods, and other parts with arbitrary shapes and applications.

Examples of the electric parts and the electronic parts include connectors such as an FPC connector, a B to B connector, a card connector, an SMT connector (a coaxial connector), and a memory card connector; SMT relays; SMT bobbins; sockets such as a memory socket and a CPU socket; switches such as a command switch and an SMT switch;

optical components such as an optical fiber component and an optical sensor; LED application components such as an LED reflector; and electronic substrates such as a solar cell substrate, an LED-mounted substrate, a flexible printed wiring board, and a resin-molded circuit board.

Examples of the automobile parts include cooling components such as a thermostat housing, a housing for a coolant control valve, a housing for a thermal management module, a radiator tank, a radiator hose, a water outlet, a water inlet, a water pump housing, and a rear joint; intake and exhaust system components such as an intercooler tank, an intercooler case, a turbo duct pipe, an EGR cooler case, a resonator, a throttle body, an intake manifold, and a tail pipe; fuel system components such as a fuel delivery pipe, a gasoline tank, a quick connector, a canister, a pump module, a fuel pipe, an oil strainer, a lock nut, and a seal material; structural components such as a mount bracket, a torque rod, and a cylinder head cover; drive system components such as a bearing retainer, a gear tensioner, a head lamp actuator gear, a throttle valve gear, a slide door roller, and a clutch peripheral component; brake system components such as an air brake tube; in-vehicle electrical components such as a wire harness connector, a motor component, a sensor, an ABS bobbin, a combination switch, and an in-vehicle switch in an engine room; and interior and exterior parts such as a slide door damper, a door mirror stay, a door mirror bracket, an inner mirror stay, a roof rail, an engine mount bracket, an inlet pipe of an air cleaner, a door checker, a plastic chain, an emblem, a clip, a breaker cover, a cup holder, an airbag, a fender, a spoiler, a radiator support, a radiator grille, a louver, an air scoop, a hood bulge, a back door, and a fuel sender module.

Examples of the industrial parts include gas pipes, oilfield pipes, hoses, anti-termite cables (communication cables, pass cables, and the like), coating parts of powder coated products (inner coating of water pipes and the like), submarine oilfield pipes, pressure hoses, hydraulic tubes, paint tubes, housings and impellers for fuel pumps, separators, supercharging ducts, butterfly valves, conveyor roller bearings, railroad tie spring clip supports, outboard engine covers, generator engine covers, blades for wind power generators, irrigation valves, large switches, and monofilaments (extruded yarns) for fishing nets.

Examples of the water faucet parts include housings for components for conveying tap water, housings for components for storing tap water, housings for filter casings, housings for water outlets, housings for pipes, housings for bathroom faucets (water switching valves, water amount switching valves, and the like), housings for sanitary components, housings for kitchen water faucet, housings for water heaters, valve components (shut-off balls, slides, and cylinders) and valve component housings, toilet water shut-off valves, housings in a showerhead, valve housings for water heaters, joints for housing equipment piping (underfloor piping and the like), joints for bathroom faucets, joints for water piping, pipe joints, housings for water meters, components (bearings, propellers, and pins) for water meters and water meters, housings for gas meters, housings for distributors, valve/pump housings for household apparatuses, steam resistant components for steam irons, inner containers for electric kettles, components (washing tanks, washing nozzles, and baskets) for dishwashers, housings for pumps, pump components (for example, turbine wheels and impellers), housings for water supply systems (hot water tanks and the like), housings for heating systems, housings for cooling systems, water regulating valves, pressure reducing valves, relief valves, electromagnetic valves, three-way valves, thermo-valves, water temperature sensors, water amount sensors, and bathtub adapters.

Examples of the household goods include valve/pump housings for tea and coffee makers; valve/pump housings for cooking appliances such as rice cookers and steam cookers; steam-resistant components (an upper lid of a rice cooker and the like) for cooking appliances such as rice cookers and steam cookers; slide components (gears and the like) for cooking appliances such as rice cookers and steam cookers; slide components (a gear for a gear pump and the like) of professional cooking appliances; and steam-resistant components (a pipe for a professional rice cooker and the like) for professional cooking appliances.

Examples of the leisure goods include inner soles of sports shoes; frames and grommets of rackets; heads and sleeves of golf clubs; reels and rods of fishing goods; screws for boats; suspensions, gears, saddles, and bottle cages for bicycles.

Since the molded article of the polyamide resin composition according to the present embodiment can be produced by injection molding, it can be suitably used for electric parts and electronic parts which are required to produce a large number of parts in a short time. Specifically, the polyamide resin composition of the present embodiment can be suitably used for electric parts and electronic parts involving an SMT process and more specifically for surface mounted parts such as SMT-compatible connectors, SMT relays, SMT bobbins, sockets, command switches, SMT switches, camera modules, power source parts, sensors, capacitor base plates, hard disk parts, resistors, fuse holders, coil bobbins, and IC housings.

One particularly preferable example of the molded article of the polyamide resin composition according to the present embodiment is a part of an SMT-compatible in-vehicle connector. The SMT-compatible in-vehicle connector generally includes a housing made of a resin composition using a resin having a melting point of 260°C or higher and a terminal. The SMT-compatible in-vehicle connector may include a seal ring, a gasket, a shell, and the like. An in-vehicle connector usually has larger outer dimensions than a connector for a consumer electronic device. Furthermore, during the SMT process, the molded article is exposed to higher temperature environments, and further, during the pre-heating process of the SMT process, the moisture inside the molded article is difficult to be released, so that blisters are likely to occur. In addition, high flame retardancy is required. In addition, the occurrence of blisters is not allowed for in-vehicle applications due to strict quality control requirements. Therefore, the molded article is required to have excellent blister resistance even when exposed to a high temperature during the SMT process. Since the molded article of the polyamide resin composition according to the present embodiment can satisfy these requirements, it is suitable for a part of an in-vehicle connector.

Examples

Hereinafter, the present invention will be specifically described with reference to Examples and Comparative Examples, but the present invention is not limited thereto.

Each evaluation in Examples and Comparative Examples was performed in accordance with the following methods.

<1. Color Value ($\Delta E$)>

L*a*b*, which is a color value of the polyamide resin composition obtained in each of Examples and Comparative Examples, was measured using the following apparatus and conditions. For the measurement, a test piece $A_{col}$ was prepared as a dumbbell-shaped tensile test piece (type A1) by a method in accordance with JIS K7139:2009 from the polyamide resin compositions obtained in each of Examples and Comparative Examples. A dumbbell-shaped tensile test piece (type A1) (test piece $A_{nat}$) was similarly prepared by preparing a polyamide resin composition having the same composition as the polyamide resin composition obtained in each of Examples and Comparative Examples, except that the colorant (E) was not contained.

In the measurement, an image was acquired using the following measurement apparatus, light source, sensor, and measurement geometry, the image was transmitted to the following device used, and L*a*b* was obtained using the following software on the following device used.

Measurement apparatus: Colorimeter RAL COLORCATCH NANO manufactured by RAL gGmbH
Light source: CIE Standard light source D65
Sensor: CCD camera (224 x 224 pixels)
Measurement geometry: 45°/0°
Software: RAL iCOLOURS (version 3.7.2)
Device used: iPhone (registered trademark) 8 (iOS 13.3) manufactured by Apple Inc.

From the obtained L*a*b*, $\Delta E$ represented by the following formula (X) was calculated.

[Math. 3]

$$\Delta E = [(L*_{col} - L*_{nat})^2 + (a*_{col} - a*_{nat})^2 + (b*_{col} - b*_{nat})^2]^{1/2} \quad (X)$$

In the formula (X), $L*_{col}$, $a*_{col}$, and $b*_{col}$ are L*, a*, and b* defined by the CIE1976 (L*a*b*) color system of the polyamide resin composition (test piece $A_{col}$) obtained in each Example, and $L*_{nat}$, $a*_{nat}$, and $b*_{nat}$ are L*, a*, and b* defined by the CIE1976 (L*a*b*) color system of a colorant-free polyamide resin composition (test piece $A_{nat}$) having the same composition as the above-mentioned polyamide resin composition except that the colorant (E) is not contained. Table 1 shows $\Delta E$.

<2. Evaluation of Flame Retardancy>

The flame retardancy was evaluated according to the provisions of the UL-94 standard.

Using an injection molding machine manufactured by Nissei Plastic Industrial Co., Ltd. (mold clamping force: 80 tons, screw size: $\varphi$26 mm), each of the polyamide resin compositions obtained in Examples and Comparative Examples was molded at a cylinder temperature (320°C) higher by 14°C than the melting point of the polyamide of the component (A) under the condition of a mold temperature of 140°C to obtain a plurality of test pieces B1 having a thickness of 0.75 mm, a width of 13 mm, and a length of 125 mm. Similarly, a plurality of test pieces B2 having a thickness of 3.0 mm, a width of 13 mm, and a length of 125 mm were obtained.

Next, the upper ends of the obtained test pieces B1 and B2 were clamped to fix each test piece vertically, a predetermined blue flame having a height of 20 ± 1 mm was applied to the lower end for 10 seconds, and the combustion time (first time) of each test piece was measured. Immediately after the fire was extinguished, the flame was applied to the lower end again and was removed, and the combustion time (second time) of each test piece was measured. The same measurement was repeated for five pieces to obtain ten data in total including five data on the first combustion time and five data on the second combustion time. The total of the ten data was denoted as T, the maximum value among the ten data was denoted as M, and evaluation was made according to the following evaluation criteria.

Presence or absence of drips during contact with flame was also visually observed.

[Evaluation criteria]

V-0: T was 50 seconds or less, M was 10 seconds or less, flame did not grow up to reach the cramp, and cotton 12 inches below the test piece was not ignited even when meltage with flame dropped.
V-1: T was 250 seconds or less, M was 30 seconds or less, flame did not grow up to reach the cramp, and cotton 12 inches below the test piece was not ignited even when meltage with flame dropped.
V-2: T was 250 seconds or less, M was 30 seconds or less, flame did not grow up to reach the cramp, and cotton 12 inches below the test piece was ignited when meltage with flame dropped.
X: None of the evaluation criteria of the UL-94 was satisfied.

<3. Calculation of Parameters Rs1, Rs2, As, EqD, and (bs/as)>

3-1. Preparation of Test Piece C

Using an injection molding machine manufactured by Sumitomo Heavy Industries, Ltd. (mold clamping force: 18 tons, screw size: $\varphi$18 mm), each of the polyamide resin compositions obtained in Examples and Comparative Examples was injection-molded in a mold having a film gate with a width of 10 mm and a height of 0.9 mm at a cylinder temperature (320°C) higher by 14°C than the melting point of the polyamide of the component (A) under the conditions of a mold temperature of 140°C to prepare a plurality of sheet-shaped test pieces C each having a length of 30 mm, a width of 10 mm, and a thickness of 1.0 mm, each made of the polyamide resin composition.

The injection molding was performed at an injection speed of 60 mm/s, a holding pressure of 60 MPa, a holding time of 1.0 seconds, a cooling time of 4.0 seconds, and a cycle time of 11.0 seconds, and the injection time was about 0.15 seconds and the filling pressure was about 60 MPa, depending on the composition. The temperatures for the cylinder were set to 320°C, 320°C, 320°C, 320°C, and 300°C in order from the cylinder nozzle.

3-2. Cross-Sectional Observation of Test Piece C

The obtained test piece C was cut with a razor with the upper surface as the main surface with respect to the flow direction of the resin at the time of injection molding, and the cross section in the thickness direction (coronal plane) was exposed as the cut surface (see Fig. 1). The cutting position of the test piece C was set to a position parallel to the width direction (W direction) of the test piece C (one dot chain line in Fig. 2) at a position 0.1 cm (= 1 mm) from the film gate (one end of the test piece C in the length direction (L direction)) which is a starting point of the flow direction of the resin at the time of injection molding in the L direction of the test piece C. Subsequently, the test piece C in which the cross section in the thickness direction was exposed was once embedded in an epoxy resin. Thereafter, the cut surface of the test piece C was polished using a mechanical polisher "SP-150" manufactured by SERVTEC Co., Ltd. to perform surface shaping. Thus, a test piece C having a polished surface was prepared.

Next, a backscattered electronic image (SEM image) of the polished surface of the test piece C was acquired at 23°C under high vacuum at an observation magnification of 5000 times using a field-emission scanning electronic microscope "Regulus 8220" (detector: LA-backscattered electronic mode) manufactured by Hitachi High-Tech Corporation. At this time, the brightness and contrast of the image were adjusted with a brightness/contrast automatic adjustment button.

3-3. Image Analysis of Test Piece C

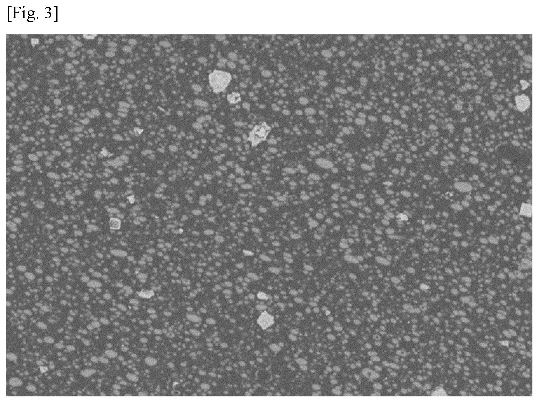

Next, from the acquired SEM image, an SEM image of a region which is at a depth of 250 $\mu$m $\pm$ 8.8 $\mu$m from the main surface of the test piece C and has a width orthogonal to the thickness direction (T direction) of 25 $\mu$m in the thickness direction cross section of the test piece C was adopted as an analysis region. As the width of the analysis region, a range of $\pm$ 12.5 $\mu$m from the central position (midpoint) in the width direction (W direction) of the test piece C was adopted (see Fig. 1). The analysis region is shown as a portion surrounded by a broken line identified as "Region" in the partially enlarged view of the cross section in the thickness direction of the test piece C in Fig. 1. Fig. 3 shows an SEM image of the analysis region of the test piece C of Example 3. However, in Comparative Example 4, since the particle diameter of the bromine-based flame retardant was coarse and did not fit in the observation field of view, it was determined that the measurement was impossible.

The SEM image of the analyzed region was captured in image analysis software "Avizo 3D" (ver. 2022.2) (hereinafter, also simply referred to as "analysis software") manufactured by Thermo Fisher Scientific Inc., and image analysis was performed. The image was captured such that the upper end of the SEM image parallel to the main surface of the test piece C was the upper end of the captured image. The SEM image of the analysis region was converted into 0.02 μm/voxel data, and the operation was performed according to the following procedure.

(1) Noise elimination

GPU Standard Mode of "Non-Local Means Filter" processing of the analysis software was used. As a result, noise was eliminated from the image.

(2) Classification

In the image obtained in the above (1), the polyamide (A), the particles of the bromine-based flame retardant (B), and the particles of the flame retardant aid (F) were each subjected to binarization processing based on the difference in brightness value, and markers were set. Except for Comparative Example 4, the inorganic filler (C) was not contained in the images of Examples and Comparative Examples. The intensity range was 0 to 100 for the polyamide (A), 93 to 165 for the bromine-based flame retardant (B), and 157 to 255 for the flame retardant aid (F), and the analysis was performed by setting each value so as not to overlap.

Subsequently, the "Marker-Based Watershed" function of the analysis software was used. As a result, the polyamide (A), the particles of the bromine-based flame retardant (B), and the particles of the flame retardant aid (F) were classified so as to be distinguishable from each other on the image.

(3) Fractionation

In the image obtained in the above (2), the "Separate Objects" function of the aforementioned analysis software was used for the particles of the bromine-based flame retardant (B). As a result, a boundary line was set between the particles of the bromine-based flame retardant (B) adjacent to each other, so that they could be handled as particles that could be individually identified.

Subsequently, noise was eliminated. As a result, a dot hole or the like of 10 pixels or less was removed. The dot hole is an example of noise caused by reflection and scattering at the time of photographing to obtain the SEM image.

(4) Analysis of object

Next, the image obtained in the above (3) was subjected to the following image analysis using each function of the analysis software with the particle of the bromine-based flame retardant (B) as an object.

(4-1) As

In order to obtain As ($\mu m^2$), the "Label Analysis" function of the aforementioned analysis software was performed as follows.

The "Area" function of the "Label Analysis" function was used. As a result, the value of the cross-sectional area ($\mu m^2$) of each of the particles of the bromine-based flame retardant (B) was obtained. The number-average value of these values with respect to the number of objects was adopted as As ($\mu m^2$).

(4-2) Calculation of Rs1 in Formula (1)

(4-2-1) bs/as in Formula (1)

The "FeretShape" function of the "Label Analysis" function of the analysis software was used. The angle was set at intervals of 18° with the lateral direction of the image set at 0°.

As a result, the FeretShape value of each of the particles of the bromine-based flame retardant (B) was obtained. Then, the number-average value of these values with respect to the number of objects was adopted as the value of bs/as in Formula (1).

(4-2-2) Calculation of Rs1

Rs1 ($\mu$m$^2$) was calculated based on the following Formula (1).

$$Rs1 = (bs/as) \times As \quad (1)$$

In this calculation, As ($\mu$m$^2$) obtained in the above (4-1) and the value of bs/as obtained in the above (4-2-1) were used.

(4-3) Calculation of EqD and EqD $\times$ $\pi$

In order to obtain EqD ($\mu$m), the "Label Analysis" function of the aforementioned analysis software was performed as follows.

The "EqDiameter" function of the "Label Analysis" function was used. Thus, the value of the diameter of a perfect circle having the same area as the cross-sectional area of each particle of the bromine-based flame retardant (B) was obtained. Then, the number-average value of these values with respect to the number of objects was adopted as the value of EqD ($\mu$m). Subsequently, EqD $\times$ $\pi$ was calculated.

(4-4) Calculation of Rs2 in Formula (2)

Rs2 ($\mu$m) was calculated based on the following Formula (2).

$$Rs2 = (bs/as) \times EqD \times \pi \quad (2)$$

In this calculation, EqD ($\mu$m) obtained in the above (4-3) and the value of bs/as obtained in the above (4-2-1) were used.

<4. Evaluation of Blister Resistance>

The test piece C obtained in the above 3-1 was allowed to stand for 168 hours under the conditions of a temperature of 85°C and a relative humidity of 85%. Thereafter, a reflow test was performed on the test piece C using a reflow system (TNX25-30EM manufactured by TAMURA CORPORATION). In the reflow test, the temperature was increased from 25°C to 150°C over 60 seconds, then increased to 180°C over 90 seconds, further increased to a peak temperature over 60 seconds, and kept at the peak temperature for 20 seconds. The peak temperature was 270°C.

After completion of the reflow test, the appearance of each test piece was visually observed. In the case where the surface of the test piece C was slightly swollen even at one place, it was judged that the test piece C had blisters.

The blister occurrence rate was calculated from the observation results of 100 test pieces C. Specifically, the blister occurrence rate was calculated as a ratio (percentage) of the number of test pieces in which a blister occurred even in one place among 100 test pieces.

The blister resistance was evaluated based on the following five grade criteria. When the evaluation result is "A" or "B", there is no problem in practical use.

    A: Blister occurrence rate of 0% or more and less than 10%
    B: Blister occurrence rate of 10% or more and less than 25%
    C: Blister occurrence rate of 25% or more and less than 50%
    D: Blister occurrence rate of 50% or more and less than 75%
    E: Blister occurrence rate of 75% or more and 100% or less

<5. Evaluation of Bar-Flow Length>

Using an injection molding machine manufactured by Nissei Plastic Industrial Co., Ltd. (mold clamping force: 80 tons, screw size: $\varphi$26 mm), each of the polyamide resin compositions obtained in Examples and Comparative Examples was molded at a cylinder temperature (320°C) higher by 14°C than the melting point of the polyamide of the component (A) using a mold having a width of 40 mm and a thickness of 0.5 mm under the condition of a mold temperature of 140°C for 5 shots under 1000 kgf conditions, then for 10 shots under 750 kgf conditions, and then for 5 shots under 750 kgf conditions to obtain a polyamide molded article, and the flow length (mm) of the obtained polyamide molded article was measured and the average value thereof was taken as the bar-flow length.

<6. Evaluation of Mechanical Properties>

Test pieces were prepared as described below, and mechanical properties such as tensile properties and bending properties were evaluated using the test pieces.

6-1. Preparation of Test Pieces D and E

Using an injection molding machine manufactured by Sumitomo Heavy Industries, Ltd. (mold clamping force: 100 tons, screw size: φ32 mm), each of the polyamide resin compositions obtained in Examples and Comparative Examples was molded using a T-runner mold under the conditions of a cylinder temperature (320°C) higher by 14°C than the melting point of the polyamide of the component (A) and a mold temperature of 140°C to prepare a multi-purpose test piece type A1 (dumbbell-shaped test piece described in JIS K7139:2009, thickness: 4 mm, whole length: 170 mm, length of parallel portion: 80 mm, width of central parallel portion: 10 mm) (hereinafter, also referred to as "test piece D").

In addition, a test piece (hereinafter, also referred to as "test piece E") having the same shape as that of the test piece D and having a weld at the center of the parallel portion in a direction perpendicular to the longitudinal direction of the parallel portion was molded.

6-2. Tensile Properties: Tensile Strength at Break and Tensile Strain at Break

Using the test piece D prepared in the above 6-1, the tensile strength at break (MPa) and the tensile strain at break (%) were measured using a universal material tester (manufactured by Instron) under the conditions of a test speed of 1 mm/minute and a distance between grippers of 115 mm in accordance with ISO 527-1 (second edition, 2012).

6-3. Tensile Properties: Weld Tensile Strength at Break

Using the test piece E prepared in the above 6-1, the weld tensile strength at break (MPa) was measured using a universal material tester (manufactured by Instron) under the conditions of a test speed of 1 mm/minute and a distance between grippers of 115 mm in accordance with ISO 527-1 (second edition, 2012).

6-4. Bending Properties: Flexural Strength and Flexural Modulus

Using the test piece D prepared in the above 6-1, the flexural strength (MPa) and the flexural modulus (GPa) were measured using a universal material tester (manufactured by Instron) under the conditions of a test speed of 2 mm/minute and a fulcrum distance of 64 mm in accordance with ISO 178 (second edition, 2012).

<Example 1>

100 parts by mass of polyamide (A2) as the component (A), 49 parts by mass of pellets of the bromine-based flame retardant (B-1) as the component (B), 1.2 parts by mass of the aromatic vinyl-based copolymer (D-1) as the component (D), 0.5 parts by mass of the colorant (E-1) which is carbon black as the component (E), 7.1 parts by mass of the flame retardant aid (F-1) as the component (F), and 0.5 parts by mass of the antioxidant, 1.2 parts by mass of the drip preventing agent, and 0.7 parts by mass of the release agent as the other components were fed from a hopper at the most upstream part of a twin-screw extruder ("MEGA 32L" manufactured by STEER Engineering: screw φ31.6 mm, L/D = 52, rotation speed 150 rpm, discharge rate 10 kg/h), and 78 parts by mass of glass fibers (C1-2) as the component (C) were fed from a side-feeder, and melt-kneading was performed at 320°C.

The melt-kneaded polyamide resin composition was extruded in the form of strands, cooled, and cut to obtain pellets of the polyamide resin composition.

Using the obtained pellets, test pieces having a predetermined shape were prepared according to the above-described method, and various physical properties were evaluated. The results are shown in Table 1.

<Examples 2 to 9 and Comparative Examples 1 to 9>

Pellets of the polyamide resin compositions of Examples and Comparative Examples were obtained by melt-kneading in the same manner as in Example 1, except that the types and blending amounts of the components were changed as shown in Table 1 and Table 2. Using the obtained pellets, test pieces having a predetermined shape were prepared by injection molding according to the above-described method, and various physical properties were evaluated. The results are shown in Table 1 and Table 2.

The components shown in Table 1 and Table 2 are as follows.

[Polyamide (A)]

- Polyamide (A-1): a polyamide in which the dicarboxylic acid unit is a terephthalic acid unit and the diamine unit is a 1,9-nonandiamine unit and a 2-methyl-1,8-octanediamine unit (molar ratio: 85/15), melting point: 306°C, glass transition temperature: 125°C, intrinsic viscosity $[\eta]$: 0.80 dl/g
- Polyamide (A-2): a polyamide in which the dicarboxylic acid unit is a terephthalic acid unit and the diamine unit is a 1,9-nonandiamine unit and a 2-methyl-1,8-octanediamine unit (molar ratio: 85/15), melting point: 306°C, glass transition temperature: 125°C, intrinsic viscosity $[\eta]$: 0.93 dl/g
- Polyamide (A-3): a polyamide in which the dicarboxylic acid unit is a terephthalic acid unit and the diamine unit is a 1,9-nonandiamine unit and a 2-methyl-1,8-octanediamine unit (molar ratio: 85/15), melting point: 306°C, glass transition temperature: 125°C, intrinsic viscosity $[\eta]$: 1.0 dl/g

[Bromine-based flame retardant (B)]

- Flame retardant (B-1): manufactured by LANXESS Co., Ltd., trade name "Firemaster CP-44HF" (glycidyl methacrylate-modified polybrominated styrene)
- Flame retardant (B-2): manufactured by Albemarle Corporation, trade name "SAYTEX HP-7010" (brominated polystyrene)
- Flame retardant (B-3): manufactured by LANXESS Co., Ltd., trade name "PDBS-80" (brominated polystyrene)

[Inorganic filler (C)]

- Glass fiber (C1-1): manufactured by Central Glass Fiber Co., Ltd., trade name "ECS03-615" (cross-sectional shape: round, average fiber diameter: 9 $\mu$m, average cut fiber length: 3 mm, adhesion amount of sizing agent (surface treating agent): 0.2% by mass with respect to the total mass of the glass fiber (C1))
- Glass fiber (C1-2): manufactured by Nippon Electric Glass Co., Ltd., trade name "T-262H" (cross-sectional shape: circular, average fiber diameter: 10.5 $\mu$m, average fiber length: 3 mm, adhering amount of sizing agent (surface treating agent): 0.4% by mass with respect to the total mass of the glass fiber (C1))

[Aromatic vinyl-based copolymer (D)]

- Aromatic vinyl-based copolymer (D-1): manufactured by Polyscope Corporation, trade name "XIBOND 160" (styrene-maleic anhydride copolymer, acid value: 250 mg KOH/g, glass transition temperature: 150°C, weight-average molecular weight (Mw): 115,000)
- Aromatic vinyl-based copolymer (D-2): manufactured by Polyscope Corporation, trade name "XIBOND 250" (styrene-maleic anhydride copolymer, acid value: 280 mg KOH/g, glass transition temperature: 130°C, weight-average molecular weight (Mw): 10,000)

[Colorant (E)]

- Colorant (E-1): Carbon black manufactured by Mitsubishi Chemical Corporation, trade name "#980B"
- Colorant (E-2): "Zinc sulfide" (white inorganic colorant, CAS No. 1314-98-3)
- Colorant (E-3): "iron-manganese composite oxide" (red inorganic colorant, CAS No. 12062-81-6)
- Colorant (E-4): "Solvent Red 52" (red organic colorant, quinoline-based dye, CAS No. 81-39-0)
- Colorant (E-5): "Pigment Blue 15" (blue organic colorant, phthalocyanine-based pigment, CAS No. 147-14-8)
- Colorant (E-6): "Solvent Orange 63" (orange organic colorant, anthraquinone-based dye, CAS No. 16924-75-0)
- Colorant (E-7): "Solvent Red 179" (red organic colorant, perinone-based pigment, CAS No. 6829-22-7)

[Flame retardant aid (F)]

- Flame retardant aid (F-1): manufactured by Nippon Light Metal Company, Ltd., trade name "Flamtard S" (zinc stannate)

[Other components]

- Antioxidant: manufactured by SUMITOMO CHEMICAL COMPANY, LIMITED, trade name "Sumilizer GA-80" (3,9-bis {1,1-dimethyl-2-[β-(3-t-butyl-4-hydroxy-5-methylphenyl)propionyloxy]ethyl}-2,4,8,10-tetraoxaspiro[5.5]undecane)
- Drip preventing agent: manufactured by Chemours-Mitsui Fluoroproducts Co., Ltd., trade name "640-J" (polytetrafluoroethylene powder)
- Release agent: manufactured by Mitsui Chemicals, Inc., trade name "Hi-WAX 200P" (polyolefin-based wax)

[Table 1]

Table 1

| | Component | Unit | Example 1 | Example 2 | Example 3 | Example 4 | Example 5 |
|---|---|---|---|---|---|---|---|
| | Polyamide (A-1) | Parts by mass | - | - | - | - | - |
| (A) | Polyamide (A-2) | Parts by mass | 100 | 100 | 100 | 100 | 100 |
| | Polyamide (A-3) | Parts by mass | - | - | - | - | - |
| | Flame retardant (B-1) | Parts by mass | 49 | 49 | 49 | 49 | 49 |
| (B) | Flame retardant (B-2) | Parts by mass | - | - | - | - | - |
| | Flame retardant (B-3) | Parts by mass | - | - | - | - | - |
| (C) | Glass fiber (C1-1) | Parts by mass | - | - | - | - | - |
| | Glass fiber (C1-2) | Parts by mass | 78 | 78 | 78 | 78 | 78 |
| (D) | Copolymer (D-1) | Parts by mass | 1.2 | 1.8 | 1.8 | 2.4 | - |
| | Copolymer (D-2) | Parts by mass | - | - | - | - | 1.8 |
| | Colorant (E-1) | Parts by mass | 0.5 | 0.5 | 0.5 | 0.5 | 0.5 |
| | Colorant (E-2) | Parts by mass | - | - | - | - | - |
| | Colorant (E-3) | Parts by mass | - | - | - | - | - |
| (E) | Colorant (E-4) | Parts by mass | - | - | - | - | - |
| | Colorant (E-5) | Parts by mass | - | - | - | - | - |
| | Colorant (E-6) | Parts by mass | - | - | - | - | - |
| | Colorant (E-7) | Parts by mass | - | - | - | - | - |
| (F) | Flame retardant aid (F-1) | Parts by mass | 7.1 | 7.1 | 7.1 | 7.1 | 7.1 |
| Other component | Antioxidant | Parts by mass | 0.5 | 0.5 | 0.5 | 0.5 | 0.5 |
| | Drip preventing agent | Parts by mass | 1.2 | 0.6 | 0.0 | 0.0 | 0.0 |
| | Release agent | Parts by mass | 0.7 | 0.7 | 0.7 | 0.7 | 0.7 |
| As | | $\mu m^2$ | 0.051 | 0.039 | 0.040 | 0.040 | 0.049 |
| bs/as | | - | 1.55 | 1.49 | 1.54 | 1.52 | 2.15 |
| Rs1 | | $\mu m^2$ | 0.08 | 0.06 | 0.06 | 0.06 | 0.11 |
| EqD | | $\mu m$ | 0.21 | 0.16 | 0.19 | 0.18 | 0.21 |
| EqD×π | | $\mu m$ | 0.65 | 0.52 | 0.61 | 0.55 | 0.67 |
| Rs2 | | $\mu m$ | 1.01 | 0.78 | 0.94 | 0.84 | 1.44 |
| Blister resistance | | - | A | A | A | A | A |
| Bar-flow length | | mm | 66 | 64 | 60 | 60 | 64 |
| Tensile strength at break | | MPa | 170 | 165 | 160 | 156 | 160 |
| Tensile strain at break | | % | 1.7 | 1.6 | 1.5 | 1.5 | 1.5 |
| Weld tensile strength at break | | MPa | 47 | 49 | 41 | 39 | 47 |
| Flexural strength | | MPa | 231 | 233 | 227 | 228 | 233 |
| Flexural modulus | | GPa | 12 | 12 | 11 | 11 | 11 |
| Flame retardancy (0.75 mm) | | - | V-0 | V-0 | V-0 | V-0 | V-0 |
| Flame retardancy (3.0 mm) | | - | V-0 | V-0 | V-0 | V-0 | V-0 |
| ΔE | | - | 76 | 76 | 76 | 76 | 76 |

(Polyamide resin composition / Evaluation results)

In the table, "π" is the circular constant.

Table 1 (continued)

| | Component | | Unit | Example 6 | Example 7 | Example 8 | Example 9 |
|---|---|---|---|---|---|---|---|
| Polyamide resin composition | (A) | Polyamide (A-1) | Parts by mass | 100 | 100 | 100 | 100 |
| | | Polyamide (A-2) | Parts by mass | - | - | - | - |
| | | Polyamide (A-3) | Parts by mass | - | - | - | - |
| | (B) | Flame retardant (B-1) | Parts by mass | 49 | 49 | 49 | 49 |
| | | Flame retardant (B-2) | Parts by mass | - | - | - | - |
| | | Flame retardant (B-3) | Parts by mass | - | - | - | - |
| | (C) | Glass fiber (C1-1) | Parts by mass | - | - | - | - |
| | | Glass fiber (C1-2) | Parts by mass | 78 | 78 | 78 | 78 |
| | (D) | Copolymer (D-1) | Parts by mass | 1.8 | 1.8 | 1.8 | 1.8 |
| | | Copolymer (D-2) | Parts by mass | - | - | - | - |
| | (E) | Colorant (E-1) | Parts by mass | - | - | - | - |
| | | Colorant (E-2) | Parts by mass | - | 1.0 | - | - |
| | | Colorant (E-3) | Parts by mass | 10 | - | - | - |
| | | Colorant (E-4) | Parts by mass | - | - | 0.5 | - |
| | | Colorant (E-5) | Parts by mass | 0.5 | - | - | - |
| | | Colorant (E-6) | Parts by mass | - | - | - | 0.5 |
| | | Colorant (E-7) | Parts by mass | - | - | - | 0.5 |
| | (F) | Flame retardant aid (F-1) | Parts by mass | 7.1 | 7.1 | 7.1 | 7.1 |
| | Other component | Antioxidant | Parts by mass | 0.5 | 0.5 | 0.5 | 0.5 |
| | | Drip preventing agent | Parts by mass | 1.2 | 1.2 | 1.2 | 1.2 |
| | | Release agent | Parts by mass | 0.7 | 0.7 | 0.7 | 0.7 |
| Evaluation results | | As | $\mu m^2$ | 0.058 | 0.057 | 0.050 | 0.059 |
| | | bs/as | - | 1.62 | 1.62 | 1.56 | 1.64 |
| | | Rs1 | $\mu m^2$ | 0.09 | 0.09 | 0.08 | 0.10 |
| | | EqD | $\mu m$ | 0.22 | 0.26 | 0.20 | 0.30 |
| | | EqD×$\pi$ | $\mu m$ | 0.69 | 0.82 | 0.63 | 0.94 |
| | | Rs2 | $\mu m$ | 1.12 | 1.33 | 0.98 | 1.54 |
| | | Blister resistance | - | A | B | A | B |
| | | Bar-flow length | mm | 64 | 68 | 67 | 64 |
| | | Tensile strength at break | MPa | 149 | 168 | 173 | 111 |
| | | Tensile strain at break | % | 1.4 | 1.6 | 1.7 | 1.0 |
| | | Weld tensile strength at break | MPa | 40 | 49 | 49 | 26 |
| | | Flexural strength | MPa | 213 | 231 | 190 | 190 |
| | | Flexural modulus | GPa | 11 | 11 | 11 | 11 |
| | | Flame retardancy (0.75 mm) | - | V-0 | V-0 | V-0 | V-0 |
| | | Flame retardancy (3.0 mm) | - | V-0 | V-0 | V-0 | V-0 |
| | | ΔE | - | 85 | 44 | 70 | 31 |

In the table, "π" is the circular constant.

[Table 2]

Table 2

| | | Component | Unit | Comparative Example 1 | Comparative Example 2 | Comparative Example 3 | Comparative Example 4 | Comparative Example 5 |
|---|---|---|---|---|---|---|---|---|
| Polyamide resin composition | (A) | Polyamide (A-1) | Parts by mass | 100 | - | - | - | 100 |
| | | Polyamide (A-2) | Parts by mass | - | 100 | - | - | - |
| | | Polyamide (A-3) | Parts by mass | - | - | 100 | 100 | - |
| | (B) | Flame retardant (B-1) | Parts by mass | 58 | 58 | 58 | - | 49 |
| | | Flame retardant (B-2) | Parts by mass | - | - | - | 49 | - |
| | | Flame retardant (B-3) | Parts by mass | - | - | - | - | - |
| | (C) | Glass fiber (C1-1) | Parts by mass | 83 | 83 | 83 | 78 | - |
| | | Glass fiber (C1-2) | Parts by mass | - | - | - | - | 78 |
| | (D) | Copolymer (D-1) | Parts by mass | - | - | - | - | - |
| | | Copolymer (D-2) | Parts by mass | - | - | - | - | - |
| | (E) | Colorant (E-1) | Parts by mass | 0.5 | 0.5 | 0.5 | 0.5 | - |
| | | Colorant (E-2) | Parts by mass | - | - | - | - | - |
| | | Colorant (E-3) | Parts by mass | - | - | - | - | 10 |
| | | Colorant (E-4) | Parts by mass | - | - | - | - | - |
| | | Colorant (E-5) | Parts by mass | - | - | - | - | 0.5 |
| | | Colorant (E-6) | Parts by mass | - | - | - | - | - |
| | | Colorant (E-7) | Parts by mass | - | - | - | - | - |
| | (F) | Flame retardant aid (F-1) | Parts by mass | 8.3 | 8.3 | 8.3 | 7.1 | 7.1 |
| | Other component | Antioxidant | Parts by mass | 0.5 | 0.5 | 0.5 | 0.5 | 0.5 |
| | | Drip preventing agent | Parts by mass | 1.8 | 1.8 | 1.8 | 1.2 | 1.2 |
| | | Release agent | Parts by mass | 0.8 | 0.8 | 0.8 | 0.7 | 0.7 |
| Evaluation results | | As | $\mu m^2$ | 0.13 | 0.13 | 0.15 | - | 0.23 |
| | | bs/as | - | 2.37 | 1.94 | 1.70 | - | 1.77 |
| | | Rs1 | $\mu m^2$ | 0.31 | 0.26 | 0.25 | - | 0.40 |
| | | EqD | $\mu m$ | 0.34 | 0.33 | 0.34 | - | 0.55 |
| | | EqD×$\pi$ | $\mu m$ | 1.05 | 1.04 | 1.06 | - | 1.73 |
| | | Rs2 | $\mu m$ | 2.49 | 2.01 | 1.81 | - | 3.06 |
| | | Blister resistance | - | D | E | E | E | E |
| | | Bar-flow length | mm | 80 | 72 | 62 | 73 | 75 |
| | | Tensile strength at break | MPa | 187 | 186 | 165 | 153 | 165 |
| | | Tensile strain at break | % | 2.0 | 2.0 | 1.6 | 1.7 | 1.5 |
| | | Weld tensile strength at break | MPa | 38 | 56 | 56 | 47 | 47 |
| | | Flexural strength | MPa | 240 | 260 | 261 | 231 | 227 |
| | | Flexural modulus | GPa | 11 | 12 | 12 | 11 | 12 |
| | | ΔE | - | 76 | 76 | 76 | 76 | 85 |
| | | Flame retardancy (0.75 mm) | - | V-0 | V-0 | V-0 | V-0 | V-0 |
| | | Flame retardancy (3.0 mm) | - | V-0 | V-0 | V-0 | V-0 | V-0 |

In the table, "$\pi$" is the circular constant.

Table 2 (continued)

| | Component | | Unit | Comparative Example 6 | Comparative Example 7 | Comparative example 8 | Comparative Example 9 |
|---|---|---|---|---|---|---|---|
| Polyamide resin composition | (A) | Polyamide (A-1) | Parts by mass | 100 | 100 | 100 | - |
| | | Polyamide (A-2) | Parts by mass | - | - | - | 100 |
| | | Polyamide (A-3) | Parts by mass | - | - | - | - |
| | (B) | Flame retardant (B-1) | Parts by mass | 49 | 49 | 49 | - |
| | | Flame retardant (B-2) | Parts by mass | - | - | - | |
| | | Flame retardant (B-3) | Parts by mass | - | - | - | 49 |
| | (C) | Glass fiber (C1-1) | Parts by mass | - | - | - | - |
| | | Glass fiber (C1-2) | Parts by mass | 78 | 78 | 78 | 78 |
| | (D) | Copolymer (D-1) | Parts by mass | - | - | - | - |
| | | Copolymer (D-2) | Parts by mass | - | - | - | - |
| | (E) | Colorant (E-1) | Parts by mass | - | - | - | 0.5 |
| | | Colorant (E-2) | Parts by mass | 1.0 | - | - | - |
| | | Colorant (E-3) | Parts by mass | - | - | - | - |
| | | Colorant (E-4) | Parts by mass | - | 0.5 | - | - |
| | | Colorant (E-5) | Parts by mass | - | - | - | - |
| | | Colorant (E-6) | Parts by mass | - | - | 0.5 | - |
| | | Colorant (E-7) | Parts by mass | - | - | 0.5 | - |
| | (F) | Flame retardant aid (F-1) | Parts by mass | 7.1 | 7.1 | 7.1 | 7.1 |
| | Other compone nt | Antioxidant | Parts by mass | 0.5 | 0.5 | 0.5 | 0.5 |
| | | Drip preventing agent | Parts by mass | 1.2 | 1.2 | 1.2 | 1.2 |
| | | Release agent | Parts by mass | 0.7 | 0.7 | 0.7 | 0.7 |
| Evaluation results | As | | $\mu m^2$ | 0.22 | 0.24 | 0.22 | 0.37 |
| | bs/as | | - | 1.62 | 1.72 | 1.66 | 2.08 |
| | Rs1 | | $\mu m^2$ | 0.35 | 0.41 | 0.36 | 0.76 |
| | EqD | | $\mu m$ | 0.53 | 0.59 | 0.54 | 0.62 |
| | EqD×$\pi$ | | $\mu m$ | 1.67 | 1.86 | 1.69 | 1.95 |
| | Rs2 | | $\mu m$ | 2.71 | 3.19 | 2.81 | 4.06 |
| | Blister resistance | | - | E | E | E | D |
| | Bar-flow length | | mm | 72 | 71 | 83 | 77 |
| | Tensile strength at break | | MPa | 179 | 186 | 150 | 181 |
| | Tensile strain at break | | % | 1.8 | 1.9 | 1.4 | 1.9 |
| | Weld tensile strength at break | | MPa | 50 | 55 | 42 | 54 |
| | Flexural strength | | MPa | 246 | 202 | 202 | 260 |
| | Flexural modulus | | GPa | 11 | 11 | 11 | 11 |
| | ΔE | | - | 44 | 70 | 31 | 76 |
| | Flame retardancy (0.75 mm) | | - | V-0 | V-0 | V-0 | V-0 |
| | Flame retardancy (3.0 mm) | | - | V-0 | V-0 | V-0 | V-0 |

In the table, "$\pi$" is the circular constant.

From Table 1, it was found that all of the polyamide resin compositions obtained in Examples 1 to 9 were capable of obtaining a flame-retardant polyamide resin molded article having excellent blister resistance even when exposed to a high temperature during a reflow process.

In Table 2, none of the polyamide resin compositions obtained in Comparative Examples 1 to 9 could provide a flame-retardant polyamide resin molded article having excellent blister resistance even when exposed to a high temperature during a reflow process. Regarding Comparative Examples 1 to 9, it was considered that the reason why the blister resistance was not excellent was that Rs1 represented by the formula (1) showed a large value of 0.2 $\mu m^2$ or more and Rs2 represented by the formula (2) showed a large value of 1.7 $\mu m$ or more. Therefore, it was found that, in order to provide a flame-retardant polyamide resin molded article having excellent blister resistance even when exposed to a high temperature during a reflow process, it is necessary to prepare a test piece by injection molding for a polyamide composition prepared by melt-kneading and confirm that Rs1 represented by the formula (1) is less than 0.2 $\mu m^2$ or Rs2 represented by the formula (2) is less than 1.7 $\mu m$.

In addition, in Table 2, none of the polyamide resin compositions obtained in Comparative Examples 1 to 9 could provide a flame-retardant polyamide resin molded article having excellent blister resistance even when exposed to a high temperature during a reflow process. Regarding Comparative Examples 1 to 9, it was considered that the reason why the blister resistance was not excellent was that As showed a large value of 0.1 $\mu m^2$ or more and EqD $\times \pi$ showed a large value of 1.0 $\mu m$ or more. Therefore, it was found that, in order to provide a flame-retardant polyamide resin molded article having excellent blister resistance even when exposed to a high temperature during a reflow process, it is necessary to prepare a test piece by injection molding for a polyamide composition prepared by melt-kneading and confirm that As is less than 0.1 $\mu m^2$ and EqD $\times \pi$ is less than 1.0 $\mu m$.

Industrial Applicability

The molded article of the polyamide resin composition according to the present invention is useful for various molded articles required to have high reliability of electrical connection, particularly for automobile parts and electric/-electronic parts.

**Claims**

1. A polyamide resin composition comprising a polyamide (A) having a melting point of 280°C or higher, a bromine-based flame retardant (B), an inorganic filler (C), an aromatic vinyl-based copolymer (D), and a colorant (E),

   wherein the polyamide (A) contains a diamine unit, 50 to 100 mol% of the diamine unit being an aliphatic diamine unit having 4 to 18 carbon atoms,
   the colorant (E) is at least one of an organic colorant and an inorganic colorant, and
   when particles of the bromine-based flame retardant (B) are observed in a region having a depth of 250 $\mu m \pm 8.8$ $\mu m$ from a main surface of a test piece having a length of 30 mm, a width of 10 mm, and a thickness of 1.0 mm made of the polyamide resin composition and having a width orthogonal to a thickness direction of the test piece of 25 $\mu m$ in a cross section in the thickness direction of the test piece, a number-average value As ($\mu m^2$) of the cross-sectional area of the particles of the bromine-based flame retardant (B) is smaller than 0.1 $\mu m^2$.

2. The polyamide resin composition according to claim 1, wherein when the particles of the bromine-based flame retardant (B) in the region are observed, EqD $\times \pi$ ($\mu m$), which is a product of a number-average value EqD of diameters of perfect circles having the same area as a cross-sectional area of the particles of the bromine-based flame retardant (B) and a circular constant $\pi$, is smaller than 1.0 $\mu m$.

3. A polyamide resin composition comprising a polyamide (A) having a melting point of 280°C or higher, a bromine-based flame retardant (B), an inorganic filler (C), an aromatic vinyl-based copolymer (D), and a colorant (E),

   wherein the polyamide (A) contains a diamine unit, 50 to 100 mol% of the diamine unit being an aliphatic diamine unit having 4 to 18 carbon atoms,
   the colorant (E) is at least one of an organic colorant and an inorganic colorant, and
   when particles of the bromine-based flame retardant (B) are observed in a region having a depth of 250 $\mu m \pm 8.8$ $\mu m$ from a main surface of a test piece having a length of 30 mm, a width of 10 mm, and a thickness of 1.0 mm made of the polyamide resin composition and having a width orthogonal to a thickness direction of the test piece of 25 $\mu m$ in a cross section in the thickness direction of the test piece, Rs1 ($\mu m^2$) represented by the following formula (1) is smaller than 0.2 $\mu m^2$:

$$Rs1 = (bs/as) \times As \quad (1)$$

in which,

bs/as is a number-average value of the ratio of the Feret's diameter perpendicular to the minimum Feret's diameter among the Feret's diameters of the particles of the bromine-based flame retardant (B) observed in the region, and

As is a number-average value ($\mu m^2$) of the cross-sectional area of the particles of the bromine-based flame retardant (B) observed in the region.

4. The polyamide resin composition according to claim 3, wherein when particles of the bromine-based flame retardant (B) in the region are observed, Rs2 ($\mu m$) represented by the following formula (2) is smaller than 1.7 $\mu m$:

$$Rs2 = (bs/as) \times EqD \times \pi \quad (2)$$

in which,

bs/as is the number-average value of the ratio of the Feret's diameter perpendicular to the minimum Feret's diameter among the Feret's diameters of the particles of the bromine-based flame retardant (B) observed in the region, and

EqD is a number-average value ($\mu m$) of the diameters of the perfect circles having the same area as the cross-sectional area of the particles of the bromine-based flame retardant (B) observed in the region.

5. The polyamide resin composition according to any one of claims 1 to 4, wherein $\Delta E$ represented by the following formula (X) is greater than 1:
[Math. 1]

$$\Delta E = [(L^*_{col} - L^*_{nat})^2 + (a^*_{col} - a^*_{nat})^2 + (b^*_{col} - b^*_{nat})^2]^{1/2}$$
$$(X)$$

in which, $\Delta E$ is a color difference defined by the CIE1976 ($L^*a^*b^*$) color system, $L^*_{col}$, $a^*_{col}$, and $b^*_{col}$ are $L^*$, $a^*$, and $b^*$ defined by the CIE1976 ($L^*a^*b^*$) color system of the polyamide resin composition, and $L^*_{nat}$, $a^*_{nat}$, and $b^*_{nat}$ are $L^*$, $a^*$, and $b^*$ defined by the CIE1976 ($L^*a^*b^*$) color system of a colorant-free polyamide resin composition having the same composition as the polyamide resin composition except that the colorant (E) is not contained.

6. The polyamide resin composition according to any one of claims 1 to 5, wherein the organic colorant is at least one selected from the group consisting of an anthraquinone-based dye, a perinone-based dye, an anthrapyridone-based dye, and a phthalocyanine-based dye.

7. The polyamide resin composition according to any one of claims 1 to 6, wherein the inorganic colorant is at least one selected from the group consisting of carbon black, a metal oxide, a metal sulfide, and a complex metal oxide.

8. The polyamide resin composition according to any one of claims 1 to 7, wherein the inorganic colorant is at least one selected from the group consisting of a metal oxide, a metal sulfide, and a complex metal oxide.

9. The polyamide resin composition according to any one of claims 1 to 8, wherein the colorant (E) contains the organic colorant, and a content of the organic colorant is 0.0001 to 0.5% by mass with respect to 100% by mass of the polyamide resin composition.

10. The polyamide resin composition according to any one of claims 1 to 9, wherein the colorant (E) contains the inorganic colorant, and a content of the inorganic colorant is 0.001 to 5.0% by mass with respect to 100% by mass of the polyamide resin composition.

11. The polyamide resin composition according to any one of claims 1 to 10, wherein the bromine-based flame retardant (B) is at least one selected from the group consisting of brominated polystyrene and polybrominated styrene.

12. The polyamide resin composition according to any one of claims 1 to 11, wherein the polyamide (A) contains a dicarboxylic acid unit, in the polyamide (A), 50 mol% or more of the dicarboxylic acid unit is a terephthalic acid unit, and the aliphatic diamine having 4 to 18 carbon atoms constituting the aliphatic diamine unit having 4 to 18 carbon atoms is at least one selected from the group consisting of 1,4-butanediamine, 1,6-hexanediamine, 1,9-nonanediamine, 2-methyl-1,8-octanediamine, and 1,10-decanediamine.

13. The polyamide resin composition according to claim 12, wherein the aliphatic diamine having 4 to 18 carbon atoms is at least one selected from the group consisting of 1,9-nonanediamine and 2-methyl-1,8-octanediamine.

14. The polyamide resin composition according to any one of claims 1 to 13, wherein the aromatic vinyl-based copolymer (D) contains a constitutional unit derived from at least one selected from the group consisting of styrene and $\alpha$-methylstyrene, and a constitutional unit derived from at least one selected from the group consisting of maleic anhydride and monoalkylmaleic anhydride having an alkyl group having 1 or more and 3 or less carbon atoms, and a glass transition temperature of the aromatic vinyl-based copolymer (D) is 120°C or higher.

15. The polyamide resin composition according to claim 14, wherein a content of the constitutional unit derived from at least one selected from the group consisting of maleic anhydride and monoalkylmaleic anhydride having an alkyl group having 1 or more and 3 or less carbon atoms in the aromatic vinyl-based copolymer (D) is 18 to 50% by mass.

16. The polyamide resin composition according to any one of claims 1 to 15, wherein the aromatic vinyl-based copolymer (D) has a weight-average molecular weight (Mw) of 10,000 to 500,000.

17. The polyamide resin composition according to any one of claims 1 to 16, further comprising a flame retardant aid (F).

18. The polyamide resin composition according to any one of claims 1 to 17, wherein the polyamide resin composition contains

    25 to 70 parts by mass of the bromine-based flame retardant (B),
    30 to 250 parts by mass of the inorganic filler (C),
    0.1 to 10 parts by mass of the aromatic vinyl-based copolymer (D), and
    0.0005 to 20 parts by mass of the colorant (E),
    with respect to 100 parts by mass of the polyamide (A).

19. A method for producing the polyamide resin composition according to any one of claims 1 to 18, comprising melt-kneading the polyamide (A), the bromine-based flame retardant (B), the inorganic filler (C), the aromatic vinyl-based copolymer (D), and the colorant (E), and optionally a flame retardant aid (F).

20. A molded article of the polyamide resin composition according to any one of claims 1 to 18.

21. The molded article according to claim 20, which is a connector.

22. The molded article according to claim 20 or 21, which is an in-vehicle connector.

[Fig. 1]

[Fig. 2]

Test piece C

30 mm

10 mm

Main surface

1 mm

1 mm

[Fig. 3]

## INTERNATIONAL SEARCH REPORT

| International application No. |
|---|
| **PCT/JP2024/028614** |

**A.    CLASSIFICATION OF SUBJECT MATTER**

*C08L 77/06*(2006.01)i; *C08J 5/04*(2006.01)i; *C08J 5/18*(2006.01)i; *C08K 3/013*(2018.01)i; *C08K 3/04*(2006.01)i; *C08K 3/22*(2006.01)i; *C08K 3/30*(2006.01)i; *C08K 5/08*(2006.01)i; *C08K 5/3415*(2006.01)i; *C08L 25/08*(2006.01)i; *C08L 25/18*(2006.01)i

FI:    C08L77/06; C08L25/18; C08L25/08; C08K3/013; C08K3/04; C08K3/22; C08K3/30; C08K5/08; C08K5/3415; C08J5/18 CET; C08J5/04 CFG

According to International Patent Classification (IPC) or to both national classification and IPC

**B.    FIELDS SEARCHED**

Minimum documentation searched (classification system followed by classification symbols)

C08L77/06; C08J5/04; C08J5/18; C08K3/013; C08K3/04; C08K3/22; C08K3/30; C08K5/08; C08K5/3415; C08L25/08; C08L25/18

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| A | JP 2015-143312 A (DAICEL POLYMER LIMITED) 06 August 2015 (2015-08-06) examples | 1-22 |
| A | WO 2021/206146 A1 (KURARAY CO., LTD.) 14 October 2021 (2021-10-14) examples | 1-22 |
| A | JP 2020-33412 A (ASAHI KASEI KABUSHIKI KAISHA) 05 March 2020 (2020-03-05) examples | 1-22 |
| A | WO 2020/040191 A1 (KURARAY CO., LTD.) 27 February 2020 (2020-02-27) examples | 1-22 |
| A | JP 2007-291250 A (ASAHI KASEI CHEMICALS CORPORATION) 08 November 2007 (2007-11-08) examples | 1-22 |

☑ Further documents are listed in the continuation of Box C.       ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **06 September 2024** | **15 October 2024** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (July 2022)

## INTERNATIONAL SEARCH REPORT

International application No.

**PCT/JP2024/028614**

### C. DOCUMENTS CONSIDERED TO BE RELEVANT

| Category* | Citation of document, with indication, where appropriate, of the relevant passages | Relevant to claim No. |
|---|---|---|
| A | JP 2013-119610 A (ASAHI KASEI CHEMICALS CORPORATION) 17 June 2013 (2013-06-17) examples | 1-22 |
| A | WO 2009/017043 A1 (KURARAY CO., LTD.) 05 February 2009 (2009-02-05) examples | 1-22 |

Form PCT/ISA/210 (second sheet) (July 2022)

# EP 4 759 879 A1

**INTERNATIONAL SEARCH REPORT**
Information on patent family members

| Patent document cited in search report | | | Publication date (day/month/year) | Patent family member(s) | | | Publication date (day/month/year) |
|---|---|---|---|---|---|---|---|
| JP | 2015-143312 | A | 06 August 2015 | (Family: none) | | | |
| WO | 2021/206146 | A1 | 14 October 2021 | US examples | 2023/0151152 | A1 | |
| | | | | EP | 4134401 | A1 | |
| | | | | CN | 115443309 | A | |
| | | | | KR | 10-2022-0166801 | A | |
| | | | | TW | 202144457 | A | |
| JP | 2020-33412 | A | 05 March 2020 | JP | 2022-145815 | A | |
| WO | 2020/040191 | A1 | 27 February 2020 | US examples | 2021/0198488 | A1 | |
| | | | | JP | 2024-69538 | A | |
| | | | | EP | 3842494 | A1 | |
| | | | | CN | 112585216 | A | |
| | | | | KR | 10-2021-0047867 | A | |
| | | | | TW | 202016213 | A | |
| JP | 2007-291250 | A | 08 November 2007 | (Family: none) | | | |
| JP | 2013-119610 | A | 17 June 2013 | (Family: none) | | | |
| WO | 2009/017043 | A1 | 05 February 2009 | US examples | 2011/0196080 | A1 | |
| | | | | EP | 2180018 | A1 | |
| | | | | KR | 10-2010-0044193 | A | |
| | | | | CN | 101772550 | A | |
| | | | | TW | 200909477 | A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020040191 A1
- JP 2002138197 A
- JP 2000186206 A
- JP 2007291250 A

**Non-patent literature cited in the description**

- *CHEMICAL ABSTRACTS*, 1314-98-3
- *CHEMICAL ABSTRACTS*, 12062-81-6
- *CHEMICAL ABSTRACTS*, 81-39-0
- *CHEMICAL ABSTRACTS*, 147-14-8
- *CHEMICAL ABSTRACTS*, 16924-75-0
- *CHEMICAL ABSTRACTS*, 6829-22-7